(19) Europäisches Patentamt
European Patent Office
Office européen des brevets

(11) EP 3 315 535 B1

(12) # EUROPEAN PATENT SPECIFICATION

(45) Date of publication and mention of the grant of the patent:
**13.11.2019 Bulletin 2019/46**

(21) Application number: **16814508.4**

(22) Date of filing: **24.06.2016**

(51) Int Cl.:
***C08G 81/02*** (2006.01)
***C08F 297/02*** (2006.01)
***C08L 15/00*** (2006.01)
***C08F 297/04*** (2006.01)
***C08L 83/04*** (2006.01)
***C08C 19/25*** (2006.01)
***C08K 3/36*** (2006.01)
***B60C 1/00*** (2006.01)
***C08L 53/02*** (2006.01)

(86) International application number:
**PCT/JP2016/068883**

(87) International publication number:
**WO 2016/208739 (29.12.2016 Gazette 2016/52)**

(54) **METHOD OF PRODUCTION OF CONJUGATED DIENE RUBBER**

VERFAHREN ZUR HERSTELLUNG VON KONJUGIERTEM DIENKAUTSCHUK

PROCÉDÉ DE PRODUCTION D'UN CAOUTCHOUC DE DIÈNE CONJUGUÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2015 JP 2015128343**
**30.03.2016 JP 2016067375**

(43) Date of publication of application:
**02.05.2018 Bulletin 2018/18**

(73) Proprietor: **Zeon Corporation**
**Tokyo 100-8246 (JP)**

(72) Inventors:
- **SAKURAI, Takuro**
  **Tokyo 100-8246 (JP)**
- **NISHIMURA, Saki**
  **Tokyo 100-8246 (JP)**
- **IIZUKA, Takashi**
  **Tokyo 100-8246 (JP)**

(74) Representative: **Vos, Derk**
**Maiwald Patentanwalts- und Rechtsanwaltsgesellschaft mbH**
**Elisenhof**
**Elisenstraße 3**
**80335 München (DE)**

(56) References cited:
**EP-A1- 1 661 946**
**WO-A1-2014/050341**
**WO-A1-2015/098264**
**WO-A1-2015/199226**
**JP-A- 2010 120 925**
**JP-A- 2016 037 543**
**US-A1- 2014 011 909**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 315 535 B1

## Description

### TECHNICAL FIELD

The present invention relates to a method of production of a conjugated diene rubber, more particularly relates to a method of production of a conjugated diene rubber able to give a cross-linked rubber excellent in low heat buildup and wet grip. Further, the present invention also relates to a conjugated diene rubber obtained by the method of production and to a rubber composition containing the conjugated diene rubber and a cross-linked rubber thereof.

### BACKGROUND ART

In recent years, due to environmental issues and resource issues, strong demands have been placed on tires for automobile use for improving low fuel consumption. At the same time, excellent wet grip has been sought due to safety concerns. Cross-linked rubbers obtained by using a composition containing silica as a filler are superior to cross-linked rubbers obtained by using a composition containing carbon black in low heat buildup, so the rolling resistance when used for a tire becomes smaller. For this reason, by using cross-linked rubber obtained by using a composition containing silica to make tires, it is possible to obtain tires excellent in low fuel consumption.

However, even if adding silica to conventional rubber, the affinity of rubber and silica is insufficient, so these easily separate. Due to this, the processability of the rubber composition before cross-linking is poor. Further, the cross-linked rubber obtained by cross-linking this becomes insufficient in low heat buildup.

Therefore, to improve the affinity of rubber and silica, for example, it has been proposed to add various silane coupling agents such as disclosed in Patent Document 1 and Patent Document 2 to the rubber composition. However, advanced processing techniques are required for handling silane coupling agents and silane coupling agents are expensive, so if the amounts added become greater, there is the problem that tires will become higher in manufacturing costs.

To solve this problem, for example, as disclosed in Patent Document 3, Patent Document 4, etc., when using the solution polymerization method to obtain a rubber polymer, the technique of causing a modifying agent to react with the active end of the polymer chain so as to impart the affinity with silica to the rubber itself has been studied. However, due to the growing demand for low fuel consumption and wet grip on automobile tires in recent years, rubber able to give cross-linked rubber further excellent in low heat buildup and excellent in wet grip has been demanded.

### RELATED ART DOCUMENTS

### PATENT DOCUMENTS

Patent Document 1: Japanese Patent Publication No. 2011-46640A
Patent Document 2: Japanese Patent Publication No. 2012-17291A
Patent Document 3: Japanese Patent Publication No. 2003-171418A
Patent Document 4: International Publication WO2014/050341

### SUMMARY OF THE INVENTION

### PROBLEM TO BE SOLVED BY THE INVENTION

The present invention was studied in the light of the current circumstances, and has as its object the provision of a method of production of a conjugated diene rubber able to give cross-linked rubber excellent in low heat buildup and wet grip.

### MEANS FOR SOLVING THE PROBLEM

The present inventors engaged in intensive research to achieve the above object and as a result discovered that according to a conjugated diene rubber obtained by causing, as a modifying agent, siloxane to react with a conjugated diene polymer chain having an active end, subsequently causing, as a modifying agent, a compound having a 1,6-dioxa-2-silacyclooctane structure where an 8-position is substituted by a tertiary amine structure-containing group to react with the conjugated diene polymer chain with which siloxane was reacted, a cross-linked rubber obtained by using such a rubber is excellent in low heat buildup and wet grip. The present invention was completed based on this discovery.

Therefore, according to the present invention, there is provided a method of production of a conjugated diene

rubber comprising a first step of polymerizing a monomer containing a conjugated diene compound in an inert solvent using a polymerization initiator so as to obtain a conjugated diene polymer chain having an active end, a second step of reacting siloxane with the conjugated diene polymer chain having an active end, and a third step of reacting a compound represented by the following general formula (1) with the conjugated diene polymer chain with which siloxane was reacted obtained in the second step:

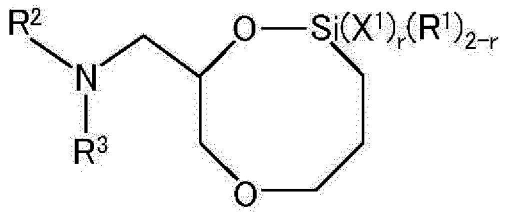

(1)

wherein, in the general formula (1), $X^1$ represents a functional group selected from a hydrocarbyloxy group, a halogen group, and a hydroxyl group, $R^1$ represents a substituted or unsubstituted hydrocarbon group, $R^2$ and $R^3$ respectively independently represent a substituted or unsubstituted hydrocarbon group, $R^2$ and $R^3$ may bond with each other to form a ring structure together with the nitrogen atom to which they are bound, when forming the ring structure they may form a ring structure together with a hetero atom other than the nitrogen atom to which they are bound in addition to the nitrogen atom to which they are bound, "r" is an integer of 0 to 2.

In the method of production of the present invention, polyorganosiloxane represented by the following general formula (2) is preferably used as the siloxane:

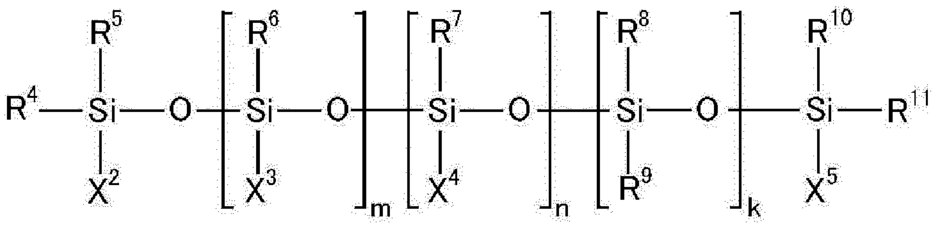

(2)

wherein, in the general formula (2), $R^4$ to $R^{11}$ are an alkyl group having 1 to 6 carbon atoms, or an aryl group having 6 to 12 carbon atoms, these may be the same or may be different from each other; $X^2$ and $X^5$ are any group selected from the group consisting of an alkyl group having 1 to 6 carbon atoms, aryl group having 6 to 12 carbon atoms, alkoxy group having 1 to 5 carbon atoms, and epoxy-group containing group having 4 to 12 carbon atoms, these may be the same or may be different from each other; $X^3$ is an alkoxy group having 1 to 5 carbon atoms, or epoxy-group containing group having 4 to 12 carbon atoms, when there are a plural number of $X^3$, they may be the same or may be different from each other; $X^4$ is a group containing 2 to 20 repeating units of alkylene glycol, when there are a plural number of $X^4$, they may be the same or may be different from each other; "m" is an integer of 0 to 200, "n" is an integer of 0 to 200, "k" is an integer of 0 to 200, and m+n+k is 1 or more.

In the method of production of the present invention, a compound represented by the following general formula (3) is preferably used as the compound represented by the general formula (1):

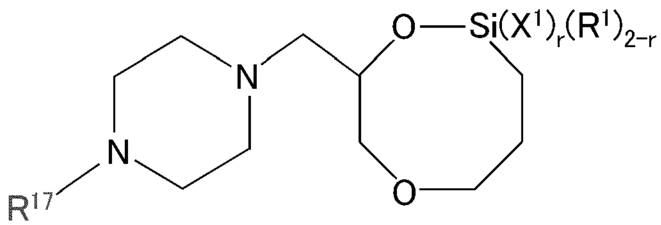

(3)

wherein, in the general formula (3), $X^1$, $R^1$, and "r" represent the same as in the general formula (1), and $R^{17}$ represents a hydrocarbon group.

In the method of production of the present invention, an organic alkali metal amide compound is preferably used as the polymerization initiator.

In the method of production of the present invention, the organic alkali metal amide compound is preferably a

compound represented by the following general formula (4).

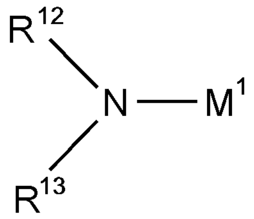

(4)

wherein, in the general formula (4), $M^1$ represents an alkali metal atom, $R^{12}$ and $R^{13}$ respectively independently represent an alkyl group, cycloalkyl group, aryl group, aralkyl group, a protecting group for amino group, or a group which produces a hydroxyl group when hydrolyzed, $R^{12}$ and $R^{13}$ may bond with each other to form a ring structure together with the nitrogen atom to which they are bound, when forming the ring structure they may form a ring structure together with a hetero atom other than the nitrogen atom to which they are bound in addition to the nitrogen atom to which they are bound.

In the method of production of the present invention, the first step preferably comprises a step of polymerizing a monomer containing isoprene, or isoprene and an aromatic vinyl compound, in an inert solvent using a polymerization initiator so as to form a polymer block (A) having an active end and containing 80 to 100 wt% of an isoprene monomer unit and 0 to 20 wt% of an aromatic vinyl monomer unit, and a step of mixing the polymer block (A) having an active end and a monomer containing 1,3-butadiene, or 1,3-butadiene and an aromatic vinyl compound, to continue polymerization reaction, and forming a polymer block (B) having an active end and containing 50 to 100 wt% of a 1,3-butadiene monomer unit and 0 to 50 wt% of an aromatic vinyl monomer unit in series with the polymer block (A) so as to obtain a conjugated diene polymer chain having an active end and containing a polymer block (A) and a polymer block (B).

In the method of production of the present invention, a weight ratio of the polymer block (A) to the polymer block (B) in the conjugated diene polymer chain having an active end and containing a polymer block (A) and a polymer block (B) is preferably 0.001 to 0.1 in terms of (weight of polymer block (A))/(weight of polymer block (B)).

Further, according to the present invention, there is provided a conjugated diene rubber obtained by the above method of production.

Furthermore, according to the present invention, there is provided a rubber composition comprising 10 to 200 parts by weight of silica with respect to 100 parts by weight of a rubber ingredient containing the conjugated diene rubber.

The rubber composition of the present invention further preferably comprises a cross-linking agent.

Further, according to the present invention, there are provided a cross-linked rubber obtained by cross-linking the above rubber composition, and a tire comprising the cross-linked rubber.

## EFFECTS OF THE INVENTION

According to the present invention, there are provided a conjugated diene rubber able to give a cross-linked rubber excellent in low heat buildup and wet grip, a rubber composition containing the conjugated diene rubber, a cross-linked rubber obtained by cross-linking the rubber composition and excellent in low heat buildup and wet grip, and a tire comprising the cross-linked rubber.

## DESCRIPTION OF EMBODIMENTS

### <Method of Production of Conjugated Diene Rubber>

The method of production of a conjugated diene rubber of the present invention comprises a first step of polymerizing a monomer containing a conjugated diene compound in an inert solvent using a polymerization initiator so as to obtain a conjugated diene polymer chain having an active end, a second step of reacting siloxane with the conjugated diene polymer chain having an active end, and a third step of reacting a compound represented by the general formula (1) to be described later with the conjugated diene polymer chain with which siloxane was reacted obtained in the second step.

### <First Step>

The first step of the method of production of the present invention is a step of polymerizing a monomer containing a conjugated diene compound in an inert solvent using a polymerization initiator so as to obtain a conjugated diene polymer chain having an active end.

In the first step of the method of production of the present invention, the conjugated diene compound used as

the monomer to obtain the conjugated diene polymer chain having an active end is not particularly limited, but 1,3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene, 3-butyl-1,3-octadiene, etc. may be mentioned. Among these as well, 1,3-butadiene and isoprene are preferable. These conjugated diene compounds may be used as single type alone or may be used as two types or more combined.

Further, in the first step of the method of production of the present invention, an aromatic vinyl compound may be used together with the conjugated diene compound as the monomer used for the polymerization. As the aromatic vinyl compound used as the monomer, styrene, methylstyrene, ethylstyrene, t-butylstyrene, α-methylstyrene, α-methyl-p-methylstyrene, chlorostyrene, bromostyrene, methoxystyrene, dimethylamino methylstyrene, dimethylamino ethylstyrene, diethylamino methylstyrene, diethylamino ethylstyrene, cyano ethylstyrene, vinylnaphthalene, etc. may be mentioned. Among these as well, styrene is preferable. The conjugated diene polymer chain having an active end obtained in the first step of the method of production of the present invention contains preferably 50 to 100 wt%, more preferably 55 to 95 wt%, of a conjugated diene monomer unit, and further contains preferably 0 to 50 wt%, more preferably 5 to 45 wt%, of an aromatic vinyl monomer unit.

Further, in the first step of the method of production of the present invention, a compound able to copolymerize with the conjugated diene compound other than the aromatic vinyl compound may be used together with the conjugated diene compound. As the compound able to copolymerize with the conjugated diene compound, chain olefin compounds such as ethylene, propylene and 1-butene; cyclic olefin compounds such as cyclopentene and 2-norbornene; unconjugated diene compounds such as 1,5-hexadiene, 1,6-heptadiene, 1,7-octadiene, dicyclopentadiene, and 5-ethylidene-2-norbornene; (meth)acrylic acid esters such as methyl (meth)acrylate, ethyl (meth)acrylate and butyl (meth)acrylate; other (meth)acrylic acid derivatives such as (meth)acrylonitrile and (meth)acrylamide; etc. may be mentioned. These compounds able to copolymerize with the conjugated diene compound are contained, as the monomer unit, in preferably 10 wt% or less, more preferably 5 wt% or less, in the conjugated diene polymer chain having an active end obtained in the first step of the method of production of the present invention.

The inert solvent used for the polymerization is not particularly limited so long as solvent which is usually used in solution polymerization and does not detract from the polymerization reaction. As specific examples of the inert solvent, chain aliphatic hydrocarbons such as butane, pentane, hexane, and heptane; alicyclic hydrocarbons such as cyclopentane and cyclohexane; aromatic hydrocarbons such as benzene, toluene, and xylene; etc. may be mentioned. These inert solvents may be used as single type alone or as two or more types combined. The amount of use of the inert solvent is not particularly limited, but an amount in which the monomer concentration becomes, for example, 1 to 50 wt%, preferably 10 to 40 wt%.

The polymerization initiator used for polymerization is not particularly limited so long as able to cause a monomer containing a conjugated diene compound to polymerize to give conjugated diene polymer chain having an active end. As specific examples, an organic alkali metal compound, organic alkali earth metal compound, and a polymerization initiator having a lanthanide-series metal compound, etc. as a primary catalyst may be mentioned. As the organic alkali metal compound, for example, organic monolithium compounds such as n-butyllithium, sec-butyllithium, t-butyllithium, hexyllithium, phenyllithium, and stilbenelithium; organic polyvalent lithium compounds such as dilithiomethane, 1,4-dilithiobutane, 1,4-dilithio-2-ethylcyclohexane, 1,3,5-trilithiobenzene, and 1,3,5-tris(lithiomethyl)benzene; organic sodium compounds such as sodium naphthalene; organic potassium compounds such as potassium naphthalene; etc. may be mentioned. Further, as the organic alkali earth metal compound, for example, di-n-butylmagnesium, di-n-hexylmagnesium, diethoxycalcium, calcium distearate, di-t-butoxystrontium, diethoxybarium, diisopropoxybarium, diethylmercaptobarium, di-t-butoxybarium, diphenoxybarium, diethylaminobarium, barium distearate, diketylbarium, etc. may be mentioned. As the polymerization initiator having a lanthanide series metal compound as a primary catalyst, for example, a polymerization initiator having a salt of a lanthanide series metal comprised of a lanthanide series metal such as lanthanum, cerium, praseodymium, neodymium, samarium, and gadolinium and a carboxylic acid, phosphorus-containing organic acid, etc. as a primary catalyst and comprised of this and a co-catalyst such as an alkylaluminum compound, organic aluminum hydride compound, and organic aluminum halide compound, etc. may be mentioned. Among these polymerization initiators, organic monolithium compound and organic polyvalent lithium compound are preferably used, an organic monolithium compound is more preferably used, and n-butyllithium is particularly preferably used.

Note that, the organic alkali metal compound may be reacted in advance with a secondary amine compound such as dibutylamine, dihexylamine, dibenzylamine, pyrrolidine, piperidine, hexamethyleneimine, and heptamethyleneimine and be used as an organic alkali metal amide compound. By using an organic alkali metal amide compound as the polymerization initiator, the obtained cross-linked rubber can become one more excellent in low heat buildup and wet grip. These polymerization initiators may be used as single type alone or as two or more types combined.

As the organic alkali metal amide compound, for example, one obtained by reacting a secondary amine compound with an organic alkali metal compound, etc. may be mentioned. Among these as well, in the method of production of the present invention, the compound represented by the following general formula (4) can be preferably used.

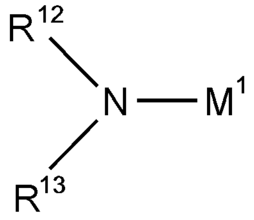

(4)

Wherein, in the general formula (4), $M^1$ represents an alkali metal atom, $R^{12}$ and $R^{13}$ respectively independently represent an alkyl group, cycloalkyl group, aryl group, aralkyl group, a protecting group for amino group, or a group which produces a hydroxyl group when hydrolyzed, $R^{12}$ and $R^{13}$ may bond with each other to form a ring structure together with the nitrogen atom to which they are bound, when forming the ring structure they may form a ring structure together with a hetero atom other than the nitrogen atom to which they are bound in addition to the nitrogen atom to which they are bound.

The alkyl group is not particularly limited, but preferably an alkyl group having 1 to 20 carbon atoms, more preferably an alkyl group having 1 to 10 carbon atoms. As the alkyl group, for example, methyl group, ethyl group, n-propyl group, isopropyl group, n-butyl group, isobutyl group, sec-butyl group, tert-butyl group, n-pentyl group, n-hexyl group, n-heptyl group, n-octyl group, n-decyl group, etc. may be mentioned.

The cycloalkyl group is not particularly limited, but preferably a cycloalkyl group having 3 to 20 carbon atoms, more preferably a cycloalkyl group having 3 to 12 carbon atoms. As the cycloalkyl group, for example, cyclopropyl group, cyclopentyl group, cyclohexyl group, cycloheptyl group, cyclooctyl group, cyclododecyl group, etc. may be mentioned.

The aryl group is not particularly limited, but preferably an aryl group having 6 to 12 carbon atoms, more preferably an aryl group having 6 to 10 carbon atoms. As the aryl group, for example, phenyl group, 1-naphthyl group, 2-naphthyl group, etc. may be mentioned.

The aralkyl group is not particularly limited, but preferably an aralkyl group having 7 to 13 carbon atoms, more preferably an aralkyl group having 7 to 9 carbon atoms. As the aralkyl group, for example, benzyl group, phenethyl group, etc. may be mentioned.

The protecting group for amino group is not particularly limited and may be any group capable of acting as a protecting group for amino group but, for example, an alkylsilyl group may be mentioned. As the alkylsilyl group, for example, trimethylsilyl group, triethylsilyl group, triphenylsilyl group, methyldiphenylsilyl group, ethylmethylphenylsilyl group, tert-butyldimethylsilyl group, etc. may be mentioned.

Note that when each of $R^{12}$ and/or $R^{13}$ is a protecting group for amino group, by removal of the protecting group for amino group, the structure where each of $R^{14}$ and/or $R^{15}$ in the general formula (6) to be described later is hydrogen atom can be introduced to one end of the polymer chain forming the obtained conjugated diene rubber.

The group which produces a hydroxyl group when hydrolyzed is not particularly limited and may be any group which produces a hydroxyl group when hydrolyzed in the presence of an acid but, for example, an alkoxyalkyl group and epoxy-group containing group may be mentioned.

As the alkoxyalkyl group, for example, methoxymethyl group, ethoxymethyl group, ethoxyethyl group, propoxymethyl group, butoxymethyl group, butoxyethyl group, propoxyethyl group, etc. may be mentioned.

Further, as the epoxy-group containing group, a group represented by the following general formula (5), etc. may be mentioned.

$$-Z^1-Z^2-E^1 \qquad (5)$$

wherein, in the general formula (5), $Z^1$ represents an alkylene group or alkylarylene group having 1 to 10 carbon atoms, $Z^2$ represents a methylene group, sulfur atom or oxygen atom, and $E^1$ represents a glycidyl group.

Further, $R^{12}$ and $R^{13}$ may bond with each other to form a ring structure together with the nitrogen atom to which they are bound, and in such a case, specific examples of the structure formed by $R^{12}$ and $R^{13}$ together with the nitrogen atom to which they are bound include azetidine ring ($R^{12}$ and $R^{13}$ are propylene groups), pyrrolidine ring ($R^{12}$ and $R^{13}$ are butylene groups), piperidine ring ($R^{12}$ and $R^{13}$ are pentylene groups), hexamethyleneimine ring ($R^{12}$ and $R^{13}$ are hexylene groups), etc.

When $R^{12}$ and $R^{13}$ are bond with each other to form a ring structure together with the nitrogen atom to which they are bound, the ring structure is preferably a 4- to 8-member ring structure.

Further, in the general formula (4), $M^1$ is an alkali metal atom, and as the alkali metal atom, lithium atom, sodium atom, potassium atom, etc. may be mentioned, but among these as well, lithium atom is preferable from the viewpoint of polymerization activity.

In the first step of the method of production of the present invention, when the compound represented by the above general formula (4) is used as the polymerization initiator, the amine structure forming an organic alkali metal

amide compound remains in the state as bonded to the polymerization initiation end of the polymer chain. Accordingly, when the compound represented by the above general formula (4) is used as the polymerization initiator, a structure represented by the following general formula (6) is introduced to one end of the polymer chain forming the obtained conjugated diene rubber.

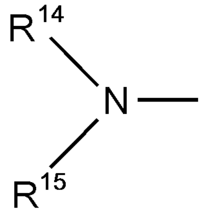

(6)

wherein, in the general formula (6), $R^{14}$ and $R^{15}$ respectively independently represent a hydrogen atom, alkyl group, cycloalkyl group, aryl group, aralkyl group, a protecting group for amino group, or a group which produces a hydroxyl group when hydrolyzed, $R^{14}$ and $R^{15}$ may bond with each other to form a ring structure together with the nitrogen atom to which they are bound, when forming the ring structure they may form a ring structure together with a hetero atom other than the nitrogen atom to which they are bound in addition to the nitrogen atom to which they are bound.

The alkyl group, cycloalkyl group, aryl group, aralkyl group, protecting group for amino group, or group which produces a hydroxyl group when hydrolyzed which may form $R^{14}$ and $R^{15}$ is the same as $R^{12}$ and $R^{13}$ in the general formula (4). Further, when $R^{14}$ and $R^{15}$ bond with each other to form a ring structure together with the nitrogen atom to which they are bound, they are the same as $R^{12}$ and $R^{13}$ in the general formula (4) .

Note that the hydrogen atom which may form $R^{14}$ and $R^{15}$ is introduced by the removal of the protecting group for amino group.

In the method of production of the present invention, when an organic alkali metal amide compound is used as the polymerization initiator, the obtained conjugated diene rubber can have an amine structure at one end and a specific structure derived from the modifying agent at the other end. As a result, due to the effect of such an amine structure, the cross-linked rubber obtained by using the conjugated diene rubber can be more excellent in low heat buildup and wet grip.

The method of addition of an organic alkali metal amide compound as the polymerization initiator to the polymerization system is not particularly limited, but a method may be employed where a secondary amine compound is reacted with an organic alkali metal compound in advance to obtain an organic alkali metal amide compound, which is mixed with a monomer containing the conjugated diene compound to proceed the polymerization reaction. Alternatively, a method may also be employed where an organic alkali metal compound and a secondary amine compound are separately added to the polymerization system, mixed with a monomer containing the conjugated diene compound so as to produce an organic alkali metal amide compound in the polymerization system, thereby proceeding the polymerization reaction. The reaction conditions such as reaction temperature, etc. are not particularly limited and, for example, targeted polymerization reaction conditions may be followed.

The amount of use of the secondary amine compound may be determined in accordance with the targeted addition amount of the polymerization initiator, but is usually 0.01 to 1.5 mmoles with respect to 1 mmole of the organic alkali metal compound, preferably 0.1 to 1.2 mmoles, more preferably 0.5 to 1.0 mmole in range.

The amount of use of the polymerization initiator may be determined in accordance with the targeted molecular weight of the conjugated diene polymer chain, but is usually 1 to 50 mmoles with respect to 1000 g of the monomer, preferably 1.5 to 20 mmoles, more preferably 2 to 15 mmoles in range.

The polymerization temperature is usually -80 to +150°C, preferably 0 to 100°C, more preferably 30 to 90°C in range. As the polymerization process, a batch process, continuous process, or any other process can be employed, but when copolymerizing a conjugated diene compound and aromatic vinyl compound, the batch process is preferable in the point of facilitating control of the randomness of bonds between the conjugated diene monomer units and aromatic vinyl monomer units.

Further, in polymerization of a monomer containing a conjugated diene compound, to adjust the vinyl bond content in the conjugated diene monomer units in the obtained conjugated diene polymer chain, it is preferable to add a polar compound to the inert organic solvent. As the polar compound, for example, ether compounds such as dibutyl ether, tetrahydrofuran, 2,2-di(tetrahydrofuryl)propane; tertiary amines such as tetramethylethylenediamine; alkali metal alkoxides; phosphine compounds; etc. may be mentioned. Among these as well, an ether compound and a tertiary amine are preferable, a tertiary amine is more preferable, and tetramethylethylenediamine is particularly preferable. These polar compounds may be used as single type alone or as two or more types combined. The amount of use of the polar compound may be determined in accordance with the targeted vinyl bond content and is preferably 0.001 to 100 moles with respect to 1 mole of the polymerization initiator, more preferably 0.01 to 10 moles. If the amount of use of the polar

compound is in this range, adjustment of the vinyl bond content in the conjugated diene monomer units is easy and the problem of deactivation of the polymerization initiator hardly ever arises.

The vinyl bond content in the conjugated diene monomer unit of the conjugated diene polymer chain having an active end obtained in the first step of the method of production of the present invention is preferably 1 to 90 wt%, preferably 3 to 80 wt%, particularly preferably 5 to 70 wt%. By making the vinyl bond content in the conjugated diene monomer unit the above range, the obtained cross-linked rubber becomes more excellent in low heat buildup.

The weight average molecular weight (Mw) of the conjugated diene polymer chain having an active end obtained in the first step of the method of production of the present invention is not particularly limited, but the value measured by gel permeation chromatography converted to polystyrene is preferably 100,000 to 1,000,000, more preferably 150,000 to 700,000, particularly preferably 150,000 to 500,000. By making the weight average molecular weight (Mw) of the conjugated diene polymer chain having an active end the above range, wet grip and low heat buildup of the obtained cross-linked rubber become better balanced.

Further, the molecular weight distribution represented by the ratio (Mw/Mn) of the weight average molecular weight (Mw) and the number average molecular weight (Mn) of the conjugated diene polymer chain having an active end obtained in the first step of the method of production of the present invention is not particularly limited, but is preferably 1.0 to 3.0, more preferably 1.0 to 2.5. By making the molecular weight distribution (Mw/Mn) of the conjugated diene polymer chain having an active end the above range, the production of the conjugated diene rubber becomes easy.

Further, in the method of production of the present invention, it is preferable for the first step to be as follows in view of making the obtained cross-linked rubber more excellent in low heat buildup.

More specifically, it is preferable that the first step comprise a step of polymerizing a monomer containing isoprene, or isoprene and an aromatic vinyl compound, in an inert solvent using a polymerization initiator so as to form a polymer block (A) having an active end and containing 80 to 100 wt% of an isoprene monomer unit and 0 to 20 wt% of an aromatic vinyl monomer unit, and

a step of mixing the polymer block (A) having an active end and a monomer containing 1,3-butadiene, or 1,3-butadiene and an aromatic vinyl compound, to continue polymerization reaction, and forming a polymer block (B) having an active end and containing 50 to 100 wt% of a 1,3-butadiene monomer unit and 0 to 50 wt% of an aromatic vinyl monomer unit in series with the polymer block (A) so as to obtain a conjugated diene polymer chain having an active end having a polymer block (A) and a polymer block (B).

By employing such a process, the conjugated diene polymer chain having an active end obtained in the first step can be formed of the polymer block (A) containing 80 to 100 wt% of isoprene monomer units, and 0 to 20 wt% of aromatic vinyl monomer units and the polymer block (B) having an active end and containing 50 to 100 wt% of 1,3-butadiene monomer units and 0 to 50 wt% of aromatic vinyl monomer units in series.

Hereinafter, such an embodiment is described.

[Polymer Block (A)]

The polymer block (A) in the conjugated diene polymer chain according to an embodiment of the present invention may be one so long as containing therein 80 to 100 wt% of isoprene monomer units and 0 to 20 wt% of aromatic vinyl monomer units, but one containing 85 to 95 wt% of isoprene monomer units and 5 to 15 wt% of aromatic vinyl monomer units is preferable, and one containing 89 to 95 wt% of isoprene monomer units and 5 to 11 wt% of aromatic vinyl monomer units is more preferable. With a content ratio of isoprene monomer unit and aromatic vinyl monomer unit being within the above range, when silica is added to the conjugated diene rubber, the affinity of conjugated diene rubber and silica becomes good and the low heat buildup of the cross-linked rubber obtained using this can be more enhanced.

As the aromatic vinyl compound used for forming the aromatic vinyl monomer unit contained in the polymer block (A), the same as those illustrated above as aromatic vinyl compounds can be used. Among these as well, styrene is preferable. Note that these aromatic vinyl compounds may be used as single type alone or may be used as two types or more combined.

The polymer block (A) is preferably comprised of substantially only isoprene monomer units, or isoprene monomer units and aromatic vinyl monomer units, but if desired other monomer units may be contained in addition to isoprene monomer units, or isoprene monomer units and aromatic vinyl monomer units. As the other compounds used for forming other monomer units, conjugated diene compounds other than isoprene such as 1,3-butadiene, 2,3-dimethyl-1,3-butadiene, 2-chloro-1,3-butadiene, 1,3-pentadiene, and 1,3-hexadiene; $\alpha,\beta$-unsaturated nitriles such as acrylonitrile and methacrylonitrile; unsaturated carboxylic acids or acid anhydrides such as acrylic acid, methacrylic acid, and maleic anhydride; unsaturated carboxylic acid ester such as methyl methacrylate, ethyl acrylate, and butyl acrylate: unconjugated dienes such as 1,5-hexadiene, 1,6-heptadiene, 1,7-octadiene, dicyclopentadiene, and 5-ethylidene-2-norbornene; etc. may be mentioned. Among these as well, 1,3-butadiene is preferable. These other monomers may be used as single type alone or as two or more types combined. In the polymer block (A), the content ratio of other monomer units is preferably 20 wt% or less, more preferably 10 wt% or less, further preferably 6 wt% or less.

In the present invention, the polymer block (A) in the conjugated diene polymer chain is formed by polymerizing a monomer containing isoprene, or isoprene and an aromatic vinyl compound, in an inert solvent using a polymerization initiator. As a result, the formed polymer block (A) has an active end.

For forming the polymer block (A), as the inert solvent used for polymerizing a monomer containing isoprene, or isoprene and an aromatic vinyl compound, the same as those illustrated above as inert solvents can be used. The amount of use of the inert solvent is an amount in which the monomer concentration becomes preferably 1 to 80 wt%, preferably 10 to 50 wt%.

The polymerization initiator used for forming the polymer block (A) is not particularly limited so long as one able to polymerize a monomer containing isoprene, or isoprene and an aromatic vinyl compound, and give a polymer chain having an active end. As specific examples thereof, the same as those illustrated above as the polymerization initiator can be used.

The amount of use of the polymerization initiator may be determined in accordance with the targeted molecular weight, but is preferably 4 to 250 mmoles with respect to 100 g of the monomer containing isoprene, or isoprene and an aromatic vinyl compound, more preferably 6 to 200 mmoles, particularly preferably 10 to 70 mmoles in range.

The polymerization temperature when polymerizing a monomer containing isoprene, or isoprene and an aromatic vinyl compound, is preferably -80 to +150°C, more preferably 0 to 100°C, further preferably 20 to 90°C in range. As the polymerization process, a batch process, continuous process, or any other process can be employed. Additionally, the type of bond may, for example, be made various types of bonds such as a block type, taper type, and random type.

Further, in the method of production according to an embodiment of the present invention, to adjust the vinyl bond content in isoprene monomer units in the polymer block (A), it is preferable to add a polar compound to the inert solvent when polymerizing. As the polar compound, the same as those illustrated above as polar compounds can be used. The amount of use of the polar compound may be determined in accordance with the targeted vinyl bond content and is preferably 0.01 to 30 moles with respect to 1 mole of the polymerization initiator, more preferably 0.05 to 10 moles. If the amount of use of the polar compound is in the above range, adjustment of the vinyl bond content in the isoprene monomer units is easy and the problem of deactivation of the polymerization initiator hardly ever arises. Additionally, the vinyl bond content in isoprene monomer units can be increased by increasing the amount of use of the polar compound within the above range.

The vinyl bond content in isoprene monomer units in the polymer block (A) is preferably 5 to 90 wt%, more preferably 5 to 80 wt%. By making the vinyl bond content in isoprene monomer units within the above range, low heat buildup and wet grip of the obtained cross-linked rubber can be enhanced. Note that, in the present Description, the vinyl bond content in isoprene monomer units refers to the ratio of total amount of 1,2-structured isoprene monomer units and 3,4-structured isoprene monomer units in isoprene monomer units.

The weight average molecular weight (Mw) of the polymer block (A) as the value measured by gel permeation chromatography converted to polystyrene is preferably 500 to 15,000, more preferably 1,000 to 12,000, particularly preferably 1,500 to 10,000. When the weight average molecular weight of the polymer block (A) is within the above range, low heat buildup and wet grip of the obtained cross-linked rubber can be more enhanced.

Further, the molecular weight distribution represented by the ratio (Mw/Mn) of the weight average molecular weight (Mw) and the number average molecular weight (Mn) of the polymer block (A) is preferably 1.0 to 1.5, more preferably 1.0 to 1.3. When a value (Mw/Mn) of the molecular weight distribution of the polymer block (A) is within the above range, the production of the conjugated diene rubber becomes easy.

[Polymer Block (B)]

The polymer block (B) in the conjugated diene polymer chain according to an embodiment of the present invention may be one so long as containing therein 50 to 100 wt% of 1,3-butadiene monomer units and 0 to 50 wt% of aromatic vinyl monomer units, but one containing 55 to 95 wt% of 1,3-butadiene monomer units and 5 to 45 wt% of aromatic vinyl monomer units is preferable, and one containing 55 to 90 wt% of 1,3-butadiene monomer units and 10 to 45 wt% of aromatic vinyl monomer units is more preferable. With a content ratio of 1,3-butadiene monomer units and aromatic vinyl monomer units being within the above range, the production of the conjugated diene rubber becomes easy.

As the aromatic vinyl compound used for forming the aromatic vinyl monomer unit contained in the polymer block (B), the same as those illustrated above as aromatic vinyl compounds can be used, and among these as well, styrene is preferable.

The polymer block (B) is preferably comprised of substantially only 1,3-butadiene monomer units, or 1,3-butadiene monomer units and aromatic vinyl monomer units, but if desired other monomer units may be contained in addition to 1,3-butadiene monomer units, or 1,3-butadiene monomer units and aromatic vinyl monomer units, within a range not impairing the essential feature of the present invention. As the other monomers used for forming other monomer units, the same as those illustrated above as compounds (provided that 1,3-butadiene is excluded) in the polymer block (A) can be used. Further, in the polymer block (B), isoprene can also be used as the other monomers. In the polymer

block (B), the content ratio of other monomer units is preferably 50 wt% or less, more preferably 40 wt% or less, further preferably 35 wt% or less.

In an embodiment of the present invention, the polymer block (B) in the conjugated diene polymer chain is formed in series with the polymer block (A) by mixing the polymer block (A) having an active end described above and a monomer containing 1,3-butadiene, or 1,3-butadiene and an aromatic vinyl compound, to cause the polymerization reaction to continue. The formed polymer block (B) has an active end.

For forming the polymer block (B), as the inert solvent used for polymerizing the polymer block (A) and a monomer containing 1,3-butadiene, or 1,3-butadiene and an aromatic vinyl compound, is not particularly limited, and the same as those illustrated above as inert solvents can be used.

The amount of use of the polymer block (A) having an active end when forming the polymer block (B) may be determined in accordance with the targeted molecular weight, but is preferably 0.1 to 5 mmoles with respect to 100 g of the monomer containing 1,3-butadiene, or 1,3-butadiene and an aromatic vinyl compound, more preferably 0.15 to 2 mmoles, further preferably 0.2 to 1.5 mmoles in range.

The method of mixing the polymer block (A) and a monomer containing 1,3-butadiene, or 1,3-butadiene and an aromatic vinyl compound, is not particularly limited. The polymer block (A) having an active end may be added to a solution of a monomer containing 1,3-butadiene, or 1,3-butadiene and an aromatic vinyl compound, or a monomer containing 1,3-butadiene, or 1,3-butadiene and an aromatic vinyl compound, may be added to a solution of the polymer block (A) having an active end. In the light of controlling the polymerization, the method of adding the polymer block (A) having an active end to a solution of a monomer containing 1,3-butadiene, or 1,3-butadiene and an aromatic vinyl compound is preferable.

The polymerization temperature when polymerizing a monomer containing 1,3-butadiene, or 1,3-butadiene and an aromatic vinyl compound, is preferably -80 to +150°C, more preferably 0 to 100°C, further preferably 20 to 90°C in range. As the polymerization process, a batch process, continuous process, or any other process can be employed, but when making the polymer block (B) a copolymer chain, the batch process is preferable in the point of facilitating control of the randomness of bonds.

The type of bond at each monomer when making the polymer block (B) a copolymer chain may, for example, be made various types of bonds such as a block type, taper type, and random type, but a random bond type is preferable. By making it a random type, low heat buildup of the obtained cross-linked rubber can be more enhanced. Note that, when the type of bond at 1,3-butadiene and an aromatic vinyl compound is a random type, it is preferable to supply 1,3-butadiene, or 1,3-butadiene and an aromatic vinyl compound sequentially or continuously to the polymerization system to carry out polymerization so that the ratio of aromatic vinyl compound to the total amount of 1,3-butadiene and an aromatic vinyl compound does not become too high in the polymerization system.

Further, in an embodiment of the present invention, to adjust the vinyl bond content in 1,3-butadiene monomer units in the polymer block (B), it is preferable to add a polar compound to the inert solvent when polymerizing as in adjustment of the vinyl bond content in isoprene monomer units in the polymer block (A). However, when a polar compound in an amount sufficient to adjust the vinyl bond content in 1,3-butadiene monomer units in the polymer block (B) is added to an inert solvent during preparation of the polymer block (A), a polar compound does not need to be newly added. As the polar compound used for adjusting the vinyl bond content, the same as those illustrated above as polar compounds can be used. The amount of use of the polar compound may be determined in accordance with the targeted vinyl bond content and is preferably 0.01 to 100 moles with respect to 1 mole of the polymerization initiator used for the first polymerization reaction (polymerization reaction for forming the first polymer block (A)), and the adjustment may be made more preferably in a range from 0.1 to 30 moles. If the amount of use of the polar compound is in this range, adjustment of the vinyl bond content in 1,3-butadiene monomer units is easy and the problem of deactivation of the polymerization initiator hardly ever arises.

The vinyl bond content in 1,3-butadiene monomer units in the polymer block (B) is preferably 1 to 90 wt%, more preferably 3 to 80 wt%, particularly preferably 5 to 70 wt%. By making the vinyl bond content in 1,3-butadiene monomer units in the polymer block (B) within this range, the obtained cross-linked rubber can be more excellent in low heat buildup.

In this way, the conjugated diene polymer chain having an active end and containing a polymer block (A) and a polymer block (B) can be obtained. In an embodiment of the present invention, the conjugated polymer chain having an active end is preferably formed by the polymer block (A)-polymer block (B) and has an active end at the end of the polymer block (B) in view of productivity, but may be those having a plurality of the polymer blocks (A) or those further having other polymer blocks. For example, a conjugated diene polymer chain having an active end such as the polymer block (A)-polymer block (B)-polymer block (A), etc. may be mentioned. When the polymer block (A) is formed at the active end side of the conjugated diene polymer chain, the amount of use of isoprene is preferably 10 to 100 moles with respect to 1 mole of the polymerization initiator used for the first polymerization reaction (polymerization reaction for forming the first polymer block (A)), more preferably 15 to 70 moles, particularly preferably 20 to 35 moles.

In the conjugated diene polymer chain having an active end obtained in an embodiment of the present invention, the weight ratio of the polymer block (A) to the polymer block (B) (when a plurality of the polymer blocks (A) and polymer

blocks (B) are present, the weight ratio is based on each total amount) is preferably 0.001 to 0.1, more preferably 0.003 to 0.07, particularly preferably 0.005 to 0.05 in terms of (weight of polymer block (A))/(weight of polymer block (B)). By making the weight ratio of the polymer block (A) to the polymer block (B) within the above range, wet grip and low heat buildup of the obtained cross-linked rubber become better balanced.

The content ratio of the total monomer unit of isoprene monomer units and 1,3-butadiene monomer units and the content ratio of aromatic vinyl monomer units in the conjugated diene polymer chain having an active end and containing a polymer block (A) and a polymer block (B) is, in the conjugated diene polymer chain having an active end, preferably 50 to 100 wt% of the total monomer unit of isoprene monomer units and 1,3-butadiene monomer units, and 0 to 50 wt% of aromatic vinyl monomer units, more preferably 55 to 95 wt% of the total monomer unit of isoprene monomer units and 1,3-butadiene monomer units, and 5 to 45 wt% of aromatic vinyl monomer units, particularly preferably 55 to 90 wt% of the total monomer unit of isoprene monomer units and 1,3-butadiene monomer units, and 10 to 45 wt% of aromatic vinyl monomer units. Further, the vinyl bond content in isoprene monomer units and 1,3-butadiene monomer units in the conjugated diene polymer chain having an active end and containing a polymer block (A) and a polymer block (B) is preferably within the same range as the vinyl bond content in 1,3-butadiene monomer units in the polymer block (B) described above.

<Second Step>

The second step of the method of production of the present invention is a step of reacting siloxane with the conjugated diene polymer chain having an active end obtained in the first step.

The siloxane used in the second step of the method of production of the present invention is not particularly limited so long as it has a siloxane structure (-Si-O-) as the main chain, but is preferably organosiloxane having an organic group at a side chain, and more preferably polyorganosiloxane represented by the following general formula (2).

Note that, in the second step of the method of production of the present invention, siloxane acts as a modifying agent to modify the conjugated diene polymer chain having an active end obtained in the first step.

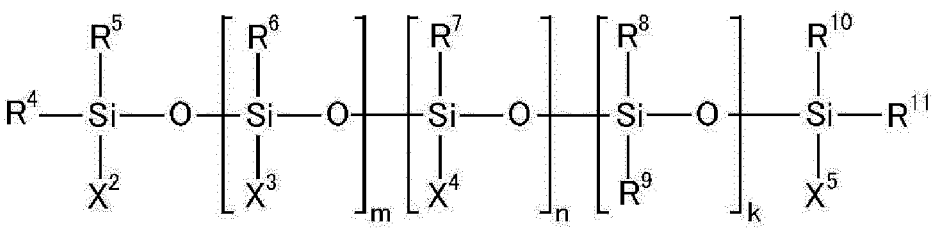 (2)

wherein, in the general formula (2), $R^4$ to $R^{11}$ are an alkyl group having 1 to 6 carbon atoms, or an aryl group having 6 to 12 carbon atoms, these may be the same or may be different from each other; $X^2$ and $X^5$ are any group selected from the group consisting of an alkyl group having 1 to 6 carbon atoms, aryl group having 6 to 12 carbon atoms, alkoxy group having 1 to 5 carbon atoms, and epoxy-group containing group having 4 to 12 carbon atoms, these may be the same or may be different from each other; $X^3$ is an alkoxy group having 1 to 5 carbon atoms, or epoxy-group containing group having 4 to 12 carbon atoms, when there are a plural number of $X^3$, they may be the same or may be different from each other; $X^4$ is a group containing 2 to 20 repeating units of alkylene glycol, when there are a plural number of $X^4$, they may be the same or may be different from each other; "m" is an integer of 0 to 200, "n" is an integer of 0 to 200, "k" is an integer of 0 to 200, and m+n+k is 1 or more.

In the polyorganosiloxane represented by the general formula (2), as the alkyl group having 1 to 6 carbon atoms which may form $R^4$ to $R^{11}$, $X^2$ and $X^5$ in the general formula (2), for example, methyl group, ethyl group, n-propyl group, isopropyl group, butyl group, pentyl group, hexyl group, cyclohexyl group, etc. may be mentioned. As the aryl group having 6 to 12 carbon atoms, for example, phenyl group, methylphenyl group, etc. may be mentioned. Among these as well, methyl group and ethyl group are preferable in the point of easy production of polyorganosiloxane itself.

Further, in the polyorganosiloxane represented by the general formula (2), as the alkoxy group having 1 to 5 carbon atoms which may form $X^2$, $X^3$ and $X^5$, for example, methoxy group, ethoxy group, propoxy group, isopropoxy group, butoxy group, etc. may be mentioned. Among these as well, methoxy group and ethoxy group are preferable in the point of easy production of polyorganosiloxane itself.

Furthermore, in the polyorganosiloxane represented by the general formula (2), as the epoxy-group containing group having 4 to 12 carbon atoms which may form $X^2$, $X^3$ and $X^5$, for example, a group represented by the following general formula (7) may be mentioned.

$-Z^3-Z^4-E^2$ (7)

wherein, in the general formula (7), $Z^3$ represents an alkylene group or alkylarylene group having 1 to 10 carbon atoms, $Z^4$ represents methylene group, sulfur atom or oxygen atom, and $E^2$ represents a hydrocarbon group having an epoxy group and 2 to 10 carbon atoms.

The group represented by the general formula (7) is preferably one where $Z^4$ is an oxygen atom, more preferably one where $Z^4$ is an oxygen atom and $E^2$ is a glycidyl group, particularly preferably one where $Z^3$ is an alkylene group having 1 to 3 carbon atoms, $Z^4$ is an oxygen atom and $E^2$ is a glycidyl group.

Further, in the polyorganosiloxane represented by the general formula (2), $X^2$ and $X^5$ are preferably, of the above, an epoxy-group containing group having 4 to 12 carbon atoms or an alkyl group having 1 to 6 carbon atoms. Further, $X^3$ is preferably, of the above, epoxy-group containing group having 4 to 12 carbon atoms. Further, it is more preferable that $X^2$ and $X^5$ be an alkyl group having 1 to 6 carbon atoms and $X^3$ be an epoxy-group containing group having 4 to 12 carbon atoms.

Further, in the polyorganosiloxane represented by the general formula (2), $X^4$, that is, the group containing repeating units of 2 to 20 alkylene glycol, is preferably a group represented by the following general formula (8).

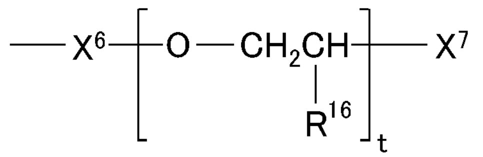

(8)

Wherein, in the general formula (8), "t" is an integer of 2 to 20, $X^6$ is an alkylene group or alkylarylene group having 2 to 10 carbon atoms, $R^{16}$ is hydrogen atom or methyl group, and $X^7$ is an alkoxy group or aryloxy group having 1 to 10 carbon atoms. Among these as well, one where "t" is an integer of 2 to 8, $X^6$ is an alkylene group having 3 carbon atoms, $R^{16}$ is hydrogen atom, and $X^7$ is methoxy group.

In the polyorganosiloxane represented by the general formula (2), "m" is an integer of 0 to 200, preferably an integer of 20 to 150, more preferably an integer of 30 to 120. When "m" is 200 or less, the polyorganosiloxane represented by the general formula (2) itself is easily produced and the viscosity thereof does not become too high, resulting in easy handling.

Further, in the polyorganosiloxane represented by the general formula (2), "n" is an integer of 0 to 200, preferably an integer of 0 to 150, more preferably an integer of 0 to 120. "k" is an integer of 0 to 200, preferably an integer of 0 to 150, more preferably an integer of 0 to 130. The total number of "m", "n" and "k" is 1 or more, preferably 1 to 400, more preferably 20 to 300, particularly preferably 30 to 250. When the total number of "m", "n" and "k" is 1 or more, the reaction of the polyorganosiloxane represented by the general formula (2) and the conjugated diene polymer chain having an active end easily proceeds, and further the total number of "m", "n" and "k" is 400 or less, the polyorganosiloxane represented by the general formula (2) itself is easily produced and the viscosity thereof does not become too high, resulting in easy handling.

The amount of use of siloxane in the second step of the method of production of the present invention is, when converted to the number of repeating units of the siloxane structure (-Si-O-) in siloxane, preferably 0.1 to 10 moles, more preferably 0.2 to 5 moles, with respect to 1 mole of the polymerization initiator used for the polymerization in the first step described above. When the amount of use of siloxane is within the above range, low heat buildup of the obtained cross-linked rubber can be more enhanced.

The method of making siloxane react with the conjugated diene polymer chain having an active end is not particularly limited, but the method of mixing these in a solvent able to dissolve the same, etc. may be mentioned. As the solvent used at this time, the same as those illustrated as inert solvents used in the first step described above can be used. Further, at this time, the method of adding siloxane to the polymerization solution used for the polymerization for obtaining the conjugated diene polymer chain having an active end is simple and preferable. Further, at this time, siloxane is preferably dissolved in an inert solvent and then added to the polymerization system. The solution concentration is preferably 1 to 50 wt% in range. The reaction temperature is not particularly limited, but is usually 0 to 120°C. The reaction time is also not particularly limited, but is usually 1 minute to 1 hour.

The timing for adding siloxane to the solution containing the conjugated diene polymer chain having an active end is not particularly limited, but it is preferable to add siloxane to this solution in the state where the polymerization reaction is not completed and the solution containing the conjugated diene polymer chain having an active end which also contains a monomer, more specifically, in the state where the solution containing the conjugated diene polymer chain having an active end contains 100 ppm or more of monomer, more preferably 300 to 50,000 ppm of monomer. By adding siloxane in this way, it becomes possible to suppress secondary reactions between the conjugated diene polymer chain having an active end and impurities, etc. contained in the polymerization system and to control the reaction well.

According to the second step of the method of production of the present invention, by making siloxane as the modifying agent react with the active end of the conjugated diene polymer chain having an active end obtained in the first step described above, at least part of the conjugated diene polymer chain forms a new bond between the silicon atom in the siloxane structure and the active end of the conjugated diene polymer chain, whereby the siloxane structure is introduced to the end of the conjugated diene polymer chain while an active end represented by $-O^-M^+$ (M is an alkali metal atom, alkali earth metal atom, or lanthanide series metal atom) is consequently formed between the oxygen atom in the siloxane structure and the metal atom which has formed the active end of the conjugated diene polymer chain. Note that the reacted conjugated diene polymer chain obtained in the second step of the method of production of the present invention includes those where the modified structure by siloxane is introduced to the polymer chain end, but other than this, may also include unmodified conjugated diene polymer chain where the modification by siloxane is not introduced.

<Third Step>

The third step of the method of production of the present invention is a step of reacting a compound represented by the following general formula (1) with the conjugated diene polymer chain with which siloxane was reacted obtained in the second step.

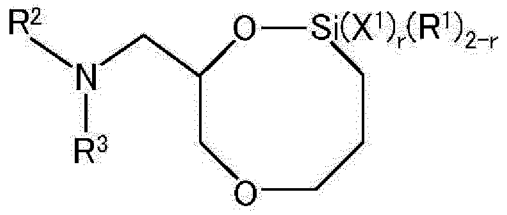

(1)

Wherein, in the general formula (1), $X^1$ represents a functional group selected from a hydrocarbyloxy group, halogen group, and hydroxyl group, $R^1$ represents a substituted or unsubstituted hydrocarbon group, $R^2$ and $R^3$ respectively independently represent a substituted or unsubstituted hydrocarbon group, $R^2$ and $R^3$ may bond with each other to form a ring structure together with the nitrogen atom to which they are bound, when forming the ring structure they may form a ring structure together with a hetero atom other than the nitrogen atom to which they are bound in addition to the nitrogen atom to which they are bound, "r" is an integer of 0 to 2.

Note that the conjugated diene polymer chain with which siloxane was reacted used in the third step of the method of production of the present invention may be one so long as it underwent the second step described above. For this reason, such a conjugated diene polymer chain with which siloxane was reacted includes the conjugated diene polymer chain having an active end at which the modified structure by siloxane is introduced and can also include the conjugated diene polymer chain having an unmodified active end at which the modification by siloxane is not introduced. Further, the conjugated diene polymer chain having the modified structure introduced by siloxane where the active end is converted to a hydroxyl group, which is obtained by hydrolyzing the active end of the conjugated diene polymer chain having an active end at which the modified structure by siloxane is introduced, can also be included. Hereinafter, in the description of the third step, the conjugated diene polymer chain with which siloxane is reacted is abbreviated as necessary as "conjugated diene polymer chain".

In the general formula (1), $X^1$ represents a functional group selected from a hydrocarbyloxy group, halogen group, and hydroxyl group. The hydrocarbyloxy group which may form $X^1$ is not particularly limited, but an alkoxy group such as methoxy group, ethoxy group, n-propoxy group, isopropoxy group, n-butoxy group, isobutoxy group, sec-butoxy group, and tert-butoxy group; an alkenyloxy group such as a vinyloxy group and allyloxy group; an aryloxy group such as a phenoxy group and naphthoxy group; an aralkyloxy group such a benzyloxy group; etc. may be mentioned. Among these as well, an alkoxy group and aryloxy group are preferable, an alkoxy group is more preferable, and methoxy group and ethoxy group are particularly preferable. Further, the halogen group which may form $X^1$ is not particularly limited, but a fluoro group, chloro group, bromo group, or iodo group may be mentioned. Among these as well, a chloro group is preferable. Further, $X^1$ may be a hydroxyl group. Such a hydroxyl group may be a hydroxyl group obtained by hydrolyzing a hydrocarbyloxy group or halogen group.

In the general formula (1), "r" (that is, the number of functional groups represented by $X^1$ in the general formula (1)) is an integer of 0 to 2, "r" is preferably 2. When "r" in the general formula (1) is 2, the two groups represented by $X^1$ contained in one molecule of the compound represented by the general formula (1) may be the same or different from each other.

In the general formula (1), $R^1$ represents a substituted or unsubstituted hydrocarbon group. The hydrocarbon group which may form $R^1$ is not particularly limited, but an alkyl group such as methyl group, ethyl group, n-propyl group,

isopropyl group, n-butyl group, isobutyl group, sec-butyl group, and tert-butyl group; an alkenyl group such as vinyl group and allyl group; an alkynyl group such as ethynyl group and propynyl group; an aryl group such as phenyl group and naphthyl group; an aralkyl group such as benzyl group; etc. may be mentioned. Among these as well, an alkyl group and aryl group are preferable, an alkyl group is more preferable, and methyl group and ethyl group are particularly preferable. Further, the hydrocarbon group represented by $R^1$ may have a substituent other than a hydrocarbon group. The substituent is not particularly limited, but a carbonyl-group containing group such as a carboxyl group, acid anhydride group, hydrocarbylcarbonyl group, alkoxycarbonyl group, and acyloxy group or an epoxy group, oxy group, cyano group, amino group, halogen group, etc. may be mentioned. Note that when "r" in the general formula (1) is 0, the two groups represented by $R^1$ contained in one molecule of the compound represented by the general formula (1) may be the same or different from each other.

In the general formula (1), $R^2$ and $R^3$ respectively represent a substituted or unsubstituted hydrocarbon group. $R^2$ and $R^3$ may bond with each other to form a ring structure together with the nitrogen atom to which they are bound. Further, when they form a ring structure they may form a ring structure together with a hetero atom other than the nitrogen atom to which they are bound in addition to the nitrogen atom to which they are bound. When $R^2$ and $R^3$ do not bond with each other, the hydrocarbon group which may form $R^2$ and $R^3$ is not particularly limited, but an alkyl group such as methyl group, ethyl group, n-propyl group, isopropyl group, n-butyl group, isobutyl group, sec-butyl group, and tert-butyl group; an alkenyl group such as vinyl group and allyl group; an alkynyl group such as ethynyl group and propynyl group; an aryl group such as phenyl group and naphthyl group; an aralkyl group such as a benzyl group; etc. may be mentioned. Among these as well, an alkyl group and aryl group are preferable, an alkyl group is more preferable, and methyl group are ethyl group are particularly preferable. Further, when $R^2$ and $R^3$ bond with each other to form a ring structure together with the nitrogen atom to which they are bound, the divalent hydrocarbon group comprised of $R^2$ and $R^3$ bonded together is not particularly limited, but an alkylene group such as a n-butylene group (when forming 1-pyrrolidine group together with the nitrogen atom to which they are bound in the general formula (1)) and n-pentylene group (when forming 1-piperidine group), butadienylene group (when forming 1-pyrrole group), etc. may be mentioned.

Note that when $R^2$ and $R^3$ are bond with each other to form a ring structure together with the nitrogen atom to which they are bound, the ring structure is preferably a 4- to 8-member ring structure.

Further, the hydrocarbon group represented by $R^2$ and $R^3$ may have a substituent other than the hydrocarbon group regardless of whether forming a ring structure. The substituent is not particularly limited, but a carbonyl-group containing group such as a carboxyl group, acid anhydride group, hydrocarbylcarbonyl group, alkoxycarbonyl group, and acyloxy group or an epoxy group, oxy group, cyano group, amino group, halogen group, etc. may be mentioned. Furthermore, when the $R^2$ and $R^3$ bond with each other to form a ring structure together with the nitrogen bond to which they are bound, as the atom forming the ring structure, a carbon atom and hetero atom may be included other than the nitrogen atom to which they are bound. As examples of the hetero atom, nitrogen atom and oxygen atom may be mentioned.

As the compound represented by the general formula (1), as particularly preferable one, one where the hydrocarbon groups represented by $R^2$ and $R^3$ bond with each other to form piperazine ring structure together with the nitrogen atom to which they are bound may be mentioned. More specifically, the compound represented by the following general formula (3) is particularly preferable. By using the one having such a structure as the compound represented by the general formula (1), the obtained cross-linked rubber can be made particularly excellent in low heat buildup.

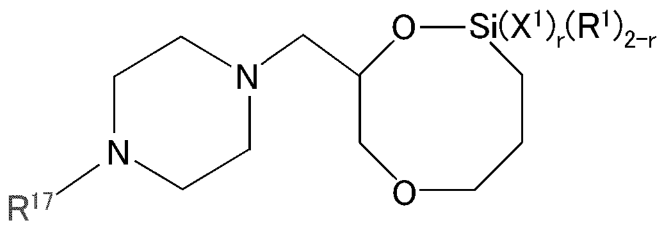

(3)

Wherein, in the general formula (3), $X^1$, $R^1$, and "r" all represent the same as in the general formula (1), and $R^{17}$ represents a hydrocarbon group.

In the general formula (3), $R^{17}$ represents a hydrocarbon group. The hydrocarbon group which may form $R^{17}$ is not particularly limited, but an alkyl group such as methyl group, ethyl group, n-propyl group, isopropyl group, n-butyl group, isobutyl group, sec-butyl group, and tert-butyl group; an alkenyl group such as vinyl group and allyl group; an alkynyl group such as ethynyl group and propynyl group; an aryl group such as phenyl group and naphthyl group; an aralkyl group such as benzyl group; etc. may be mentioned. Among these as well, an alkyl group and aryl group are preferable, an alkyl group is more preferable, and methyl group is particularly preferable.

As specific examples of the compound represented by the general formula (1), 2,2-dimethoxy-8-(4-methylpiperazinyl)methyl-1,6-dioxa-2-silacyclooctane, 2,2-diethoxy-8-(4-methylpiperazinyl)methyl-1,6-dioxa-2-silacyclooctane, 2,2-dimethoxy-8-(N,N-diethylamino)methyl-1,6-dioxa-2-silacyclooctane, 2-methoxy-2-methyl-8-(4-methylpiperazinyl)methyl-1,6-dioxa-2-silacyclooctane, etc. may be mentioned. The compound represented by the general formula (1) may be used as single type alone or as two or more types combined.

The amount of use of the compound represented by the general formula (1) is not particularly limited, but as the amount of the compound represented by the general formula (1) with respect to 1 mole of the active end of the conjugated diene polymer chain, 0.1 to 10.0 moles is preferable, 0.2 to 5.0 moles is more preferable, 0.3 to 2.0 moles is particularly preferable. By using the compound represented by the general formula (1) in such an amount, the obtained conjugated diene rubber can become one giving cross-linked rubber particularly excellent in low heat buildup.

Note that, usually, the compound represented by the general formula (1) is considered to proceed in reaction in the following way when reacted with the conjugated diene polymer chain. That is, first, illustrating the first reaction mode in the case where the compound represented by the general formula (1) reacts with the active end of the conjugated diene polymer chain having an active end, as a first stage reaction, the oxygen-silicon bond in the 8-member ring structure in the compound represented by the general formula (1) is cleaved, the silicon atom forms a new bond with the active end of the conjugated diene polymer chain, and the oxygen atom forms a salt structure with the counter ion of the active end (note that, the salt structure will react with the proton derived from the polymerization reaction terminator, etc. at the time of stopping the polymerization reaction to form a hydroxyl group). Further, when the compound represented by the general formula (1) has a hydrocarbyloxy group (when "r" in the general formula (1) is 1 or 2), the hydrocarbyloxy group and the active end of the conjugated diene polymer chain react and the hydrocarbyloxy group eliminates from the silicon atom to which it was bound, and furthermore, a new bond is formed between the silicon atom and the active end of the conjugated diene polymer chain.

Alternatively, as the second reaction mode, $X^1$ bonded to the silicon atom eliminates without the oxygen-silicon bond being cleaved in the 8-member ring structure in the compound represented by the general formula (1) in the first stage reaction, whereby the silicon atom forms a new bond with the active end of the conjugated diene polymer chain. Further, when the compound represented by the general formula (1) has a hydrocarbyloxy group (when "r" in the general formula (1) is 2), the hydrocarbyloxy group and the active end of the conjugated diene polymer chain react and the hydrocarbyloxy group eliminates from the silicon atom to which it was bound, and furthermore, a new bond is formed between the silicon atom and the active end of the conjugated diene polymer chain.

Further, the reaction mode is illustrated in the case where the compound represented by the general formula (1) reacts with the conjugated diene polymer chain to which the modified structure by siloxane is introduced and the active end converted to a hydroxyl group. $X^1$ in the general formula (1) reacts with the hydroxyl group of the conjugated diene polymer chain to which the modified structure by siloxane is introduced causing $X^1$ and the hydrogen atom of the hydroxyl group to eliminate respectively, whereby a new bond is formed between the conjugated diene polymer chain and the compound represented by the general formula (1).

The method of making the compound represented by the general formula (1) react with the conjugated diene polymer chain is not particularly limited, but the method of mixing these in a solvent able to dissolve the same, etc. may be mentioned. As the solvent used at this time, the same as those illustrated as inert solvents used in the first step and second step described above, etc. can be used. Further, at this time, in the second step described above, the method of adding the compound represented by the general formula (1) to the reaction solution used for reacting siloxane with the conjugated diene polymer chain having an active end is simple and preferable. Further, at this time, the compound represented by the general formula (1) is preferably dissolved in an inert solvent and then added to the polymerization system. The solution concentration is preferably 1 to 50 wt% in range. The reaction temperature is not particularly limited, but is usually 0 to 120°C. The reaction time is also not particularly limited, but is usually 1 minute to 1 hour.

The timing for adding the compound represented by the general formula (1) to the solution containing the conjugated diene polymer chain is not particularly limited so long as after adding siloxane in the second step described above, but it is preferable to add, similar to the second step described above, the compound represented by the general formula (1) to this solution in the state where the polymerization reaction is not completed and the solution containing the conjugated diene polymer chain also contains a monomer, more specifically, in the state where the solution containing the conjugated diene polymer chain contains 100 ppm or more, more preferably 300 to 50,000 ppm of monomer. By adding the compound represented by the general formula (1) in this way, it becomes possible to suppress secondary reactions between the conjugated diene polymer chain and impurities, etc. contained in the polymerization system and to control the reaction well.

Note that, in the second step and third step of the method of production of the present invention, when in the state before making siloxane and the compound represented by the general formula (1) react, when in the state after making only siloxane react and before making the compound represented by the general formula (1) react, or when in the state after making both siloxane and the compound represented by the general formula (1) react, with the conjugated diene polymer chain having an active end, when the conjugated diene polymer chain having an active end remains, a conventionally normally used coupling agent or modifying agent, etc. may be added to the polymerization system for

coupling or modificating part of the active end of the conjugated diene polymer chain having an active end within a range not impairing the effect of the present invention.

Then, in the third step, after making the compound represented by the general formula (1) react with the conjugated diene polymer chain, an alcohol such as methanol and isopropanol or water as a polymerization terminator is preferably added to deactivate the unreacted active end.

After deactivating the active end of conjugated diene polymer chain, an antiaging agent such as phenol-based stabilizing agent, phosphorus-based stabilizing agent, and sulfur-based stabilizing agent, crumb forming agent, and scale inhibitor, etc. may be added to the reaction solution, if desired, subsequently, the polymerization solvent is separated from the reaction solution by direct drying or steam stripping to collect the conjugated diene rubber. Note that before separating the polymerization solvent from the reaction solution, an oil extender may be mixed with the polymerization solution to collect the conjugated diene rubber as an oil extended rubber.

As the oil extender used for collecting the conjugated diene rubber as an oil extended rubber, for example, a paraffin-based, aromatic-based, and naphthene-based oil-based softening agent, plant-based softening agent, fatty acid, etc. may be mentioned. When using the oil-based softening agent, the content of the polycyclic aromatic compound extracted by the method of IP346 (test method of THE INSTITUTE PETROLEUM of the U.K.) is preferably less than 3%. When using an oil extender, the amount of use is preferably 5 to 100 parts by weight with respect to 100 parts by weight of the conjugated diene rubber, more preferably 10 to 60 parts by weight, further preferably 20 to 50 parts by weight.

The thus obtained conjugated diene rubber by the method of production of the present invention is the one obtained by carrying out the reaction using siloxane as a modifying agent in the second step described above and subsequently carrying out the reaction using the compound represented by the general formula (1) as a modifying agent in the third step described above. For this reason, the conjugated diene rubber obtained by the method of production of the present invention includes those where the modified structure by siloxane and the modified structure by the compound represented by the general formula (1) are introduced at the polymer chain end, but may also be those, other than such a rubber, in which only the modified structure by siloxane is introduced at the polymer chain end, those in which only the modified structure by the compound represented by the general formula (1) is introduced at the polymer chain end, and further those in which neither of the modified structures are introduced. Particularly, in the present invention, from the viewpoint of enhancing low heat buildup and wet grip of the obtained cross-linked rubber, the total content ratio of those in which the modified structure by siloxane and the modified structure by the compound represented by the general formula (1) are introduced and those in which only the modified structure by the compound represented by the general formula (1) is introduced (that is, the content ratio of those in which at least the modified structure by the compound represented by the general formula (1) is introduced) is preferably 10 wt% or more, more preferably 20 wt% or more, in the total polymers forming the conjugated diene rubber. Note that the upper limited is not particularly limited.

Further, the coupling rate of the conjugated diene rubber obtained by the method of production of the present invention is not particularly limited, but is preferably 10 wt% or more, more preferably 15 wt% or more, particularly preferably 20 wt% or more, and preferably 80 wt% or less, more preferably 75 wt% or less, particularly preferably 70 wt% or less. When the coupling rate is within the above range, mechanical strength and abrasion resistance of the obtained cross-linked rubber can be well balanced. Note that the coupling rate is the weight percentage of the polymer molecules having a molecular weight of 1.8 times or more of the peak top molecular weight of the conjugated diene polymer chain having an active end before reacted with siloxane and the compound represented by the general formula (1) as well as a coupling agent and other modifying agents used as necessary to the total amount of the finally obtained conjugated diene rubber. The molecular weight at this time is measured by finding the molecular weight converted to polystyrene by gel permeation chromatography.

Further, the weight average molecular weight (Mw) of the conjugated diene rubber obtained by the method of production of the present invention is, in terms of the value measured by gel permeation chromatography converted to polystyrene, preferably 100,000 to 3,000,000, more preferably 150,000 to 2,000,000, particularly preferably 200,000 to 1,500,000. By making the weight average molecular weight of the conjugated diene rubber within the above range, silica is easily added to the conjugated diene rubber and the processability of the rubber composition is more enhanced, and further low heat buildup of the obtained cross-linked rubber can be more enhanced.

The molecular weight distribution represented by the ratio (Mw/Mn) of the weight average molecular weight (Mw) and the number average molecular weight (Mn) of the conjugated diene rubber obtained by the method of production of the present invention is preferably 1.1 to 3.0, more preferably 1.2 to 2.5, particularly preferably 1.2 to 2.2. By making the molecular weight distribution (Mw/Mn) of the conjugated diene rubber the above range, low heat buildup of the obtained cross-linked rubber can be more enhanced.

Further, the Mooney viscosity ($ML_{1+4}$, 100°C) of the conjugated diene rubber obtained by the method of production of the present invention is preferably 20 to 100, more preferably 30 to 90, particularly preferably 35 to 80. Note that when the conjugated diene rubber is an oil extended rubber, it is preferable that the Mooney viscosity of the oil extended rubber be within the above range.

The conjugated diene rubber obtained by the method of production of the present invention in this way can be

suitably used for various applications by adding compounding ingredients such as a filler and cross-linking agent. Particularly, when adding a filler comprised of silica, a rubber composition able to give cross-linked rubber excellent in low heat buildup and wet grip is given.

<Rubber Composition>

The rubber composition of the present invention is a rubber composition containing 100 parts by weight of a rubber ingredient containing the conjugated diene rubber obtained by the above-mentioned method of production of the present invention and 10 to 200 parts by weight of silica.

As the silica used in the present invention, for example, dry white carbon, wet white carbon, colloidal silica, precipitated silica, etc. may be mentioned. Among these as well, wet white carbon mainly comprised of hydrous silicic acid is preferable. Further, a carbon-silica dual phase filler comprised of carbon black on the surface of which silica is carried may be used. These silicas can be used respectively alone or as two or more types combined. The nitrogen adsorption specific surface area of the silica which is used (measured by BET method based on ASTM D3037-81) is preferably 50 to 300 $m^2/g$, more preferably 80 to 220 $m^2/g$, particularly preferably 100 to 170 $m^2/g$. Further, the pH of the silica is preferably 5 to 10.

The amount of silica in the rubber composition of the present invention is 10 to 200 parts by weight with respect to 100 parts by weight of the rubber ingredients in the rubber composition, preferably 30 to 150 parts by weight, more preferably 50 to 100 parts by weight. By making the amount of the silica the above range, the processability of the rubber composition becomes excellent and the obtained cross-linked rubber becomes more improved in wet grip and low heat buildup.

The rubber composition of the present invention may further contain a silane coupling agent from the viewpoint of further improvement of low heat buildup. As the silane coupling agent, for example, vinyltriethoxysilane, β-(3,4-epoxycyclohexyl)ethyltrimethoxysilane, N-(β-aminoethyl)-γ-aminopropyltrimethoxysilane, 3-octanoylthio-1-propyl-triethoxysilane, bis(3-(triethoxysilyl)propyl) disulfide, bis(3-(triethoxysilyl)propyl) tetrasulfide, γ-trimethoxysilylpropyldimethylthiocarbamyl tetrasulfide, γ-trimethoxysilylpropylbenzothiazyl tetrasulfide, etc. may be mentioned. These silane coupling agents can be used respectively alone or as two or more types combined. The amount of the silane coupling agent is preferably 0.1 to 30 parts by weight with respect to 100 parts by weight of the silica, more preferably 1 to 15 parts by weight.

Further, the rubber composition of the present invention may further contain carbon black such as furnace black, acetylene black, thermal black, channel black, and graphite. Among these as well, furnace black is preferable. These carbon blacks can be used respectively alone or as two or more types combined. The amount of the carbon black is usually 120 parts by weight or less with respect to 100 parts by weight of the rubber ingredients in the rubber composition.

The method of adding silica to the rubber ingredient including the conjugated diene rubber obtained by the method of production of the present invention is not particularly limited, but the method of adding it to and kneading it with the solid rubber ingredient (dry kneading method), the method of adding it to a solution containing the conjugated diene rubber and coagulating and drying them (wet kneading method), etc. may be applied.

Further, the rubber composition of the present invention preferably further contains a cross-linking agent. As the cross-linking agent, for example, sulfur, halogenated sulfur, an organic peroxide, quinone dioximes, organic polyvalent amine compound, an alkylphenol resin having a methylol group, etc. may be mentioned. Among these as well, sulfur is preferably used. The amount of the cross-linking agent is preferably 0.1 to 15 parts by weight with respect to 100 parts by weight of the rubber ingredients in the rubber composition, more preferably 0.5 to 5 parts by weight, particularly preferably 1 to 4 parts by weight.

Further, the rubber composition of the present invention may have mixed with it, other than the above ingredients, in accordance with ordinary methods, compounding ingredients such as a cross-linking accelerator, cross-linking activator, antiaging agent, filler (except the above-mentioned silica and carbon black), activating agent, process oil, plasticizer, slip agent, and tackifier in respectively required amounts.

When using sulfur or a sulfur-containing compound as a cross-linking agent, jointly using a cross-linking accelerator and cross-linking activator is preferable. As the cross-linking accelerator, for example, a sulfenamide-based cross-linking accelerator; guanidine-based cross-linking accelerator; thiourea-based cross-linking accelerator; thiazole-based cross-linking accelerator; thiuram-based cross-linking accelerator; dithiocarbamic acid-based cross-linking accelerator; xanthic acid-based cross-linking accelerator; etc. may be mentioned. Among these as well, one including a sulfenamide-based cross-linking accelerator is preferable. These cross-linking accelerators may be used respectively alone or as two or more types combined. The amount of cross-linking accelerator is preferably 0.1 to 15 parts by weight with respect to 100 parts by weight of the rubber ingredients in the rubber composition, more preferably 0.5 to 5 parts by weight, particularly preferably 1 to 4 parts by weight.

As the cross-linking activator, for example, higher fatty acids such as stearic acid; zinc oxide; etc. may be mentioned. These cross-linking activators may be used respectively alone or as two types or more combined. The

amount of the cross-linking activator is preferably 0.05 to 20 parts by weight with respect to 100 parts by weight of the rubber ingredients in the rubber composition, particularly preferably 0.5 to 15 parts by weight.

Further, the rubber composition of the present invention may contain other rubber besides the conjugated diene rubber obtained by the above-mentioned method of production of the present invention. As the other rubber, for example, other rubber than the conjugated diene rubber obtained by the above-mentioned method of production of the present invention among rubbers such as natural rubber, polyisoprene rubber, emulsion polymerized styrene-butadiene copolymer rubber, solution polymerized styrene-butadiene copolymer rubber, polybutadiene rubber (high cis-BR or low cis BR, further, polybutadiene rubber containing crystal fibers made of 1,2-polybutadiene polymer also possible), styrene-isoprene copolymer rubber, butadiene-isoprene copolymer rubber, styrene-isoprene-butadiene copolymer rubber, acrylonitrile-butadiene copolymer rubber, and acrylonitrile-styrene-butadiene copolymer rubber may be mentioned. Among these as well, natural rubber, polyisoprene rubber, polybutadiene rubber, and solution polymerized styrene-butadiene copolymer rubber are preferable. These rubbers can be used respectively alone or as two or more types combined.

In the rubber composition of the present invention, the conjugated diene rubber obtained by the method of production of the present invention preferably accounts for 10 to 100 wt% of the rubber ingredients in the rubber composition, particularly preferably accounts for 50 to 100 wt%. In such a case, by the conjugated diene rubber of the present invention being included in the rubber ingredients, cross-linked rubber more improved in low heat buildup and wet grip can be obtained.

To obtain the rubber composition of the present invention, it is sufficient to knead the ingredients according to an ordinary method. For example, it is possible to knead the ingredients other than thermally unstable ingredients such as cross-linking agent and cross-linking accelerator with the conjugated diene rubber, then mix thermally unstable ingredients such as cross-linking agent and cross-linking accelerator with the kneaded material to obtain the target composition. The kneading temperature of the ingredients other than the thermally unstable ingredients and the conjugated diene rubber is preferably 80 to 200°C, more preferably 120 to 180°C, while the kneading time is preferably 30 seconds to 30 minutes. Further, the kneaded material and thermally unstable ingredients are mixed after cooling them down to usually 100°C or less, preferably 80°C or less.

<Cross-linked Rubber >

The cross-linked rubber of the present invention is obtained by cross-linking the above-mentioned rubber composition of the present invention.

The cross-linked rubber of the present invention may be produced using the rubber composition of the present invention, for example, shaping it by a forming machine corresponding to the desired shape, for example, an extruder, injection molding machine, press, rolls, etc., and heating it for a cross-linking reaction to fix the shape as a cross-linked product. In this case, the product may be cross-linked after shaping it in advance or may be cross-linked simultaneously with shaping. The shaping temperature is usually 10 to 200°C, preferably 25 to 120°C. The cross-linking temperature is usually 100 to 200°C, preferably 130 to 190°C, while the cross-linking time is usually 1 minute to 24 hours, preferably 2 minutes to 12 hours, particularly preferably 3 minutes to 6 hours.

Further, depending on the shape, size, etc. of cross-linked rubber, sometimes even if the surface is cross-linked, the inside is not sufficiently cross-linked, so the cross-linked rubber may be further heated for secondary cross-linking.

As the heating method for cross-linking the rubber composition, it is sufficient to suitably select press heating, steam heating, oven heating, hot air heating, and other general methods used for cross-linking rubber.

The thus obtained cross-linked rubber of the present invention is obtained using the conjugated diene rubber obtained by the above-mentioned method of production of the present invention, so is excellent in low heat buildup and wet grip. The cross-linked rubber of the present invention, making use of these characteristics, can for example, be used for materials for parts of tires such as cap treads, base treads, carcasses, side walls, and bead parts; materials of industrial products such as hoses, belts, mats, and vibration absorbing rubber; agents for improving the impact resistance of resins; resin film buffer agents; shoe soles; rubber shoes; golf balls; toys; and other various applications. In particular, the cross-linked rubber of the present invention can be suitably used for various parts of tires such as treads, carcasses, side walls, and beads in various types of tires such as all-season tires, high performance tires, and studless tires and in particular is excellent in low heat buildup property, so can be suitably used as tread of a low fuel consumption tire.

EXAMPLES

Below, the present invention is described in reference to further detailed examples but is not limited thereto. Note that, in below, "parts" and "%" are based on weight unless particularly represented otherwise. Additionally, the tests and evaluation were performed by the following methods.

[Weight Average Molecular Weight, Molecular Weight Distribution, Coupling Rate]

For the weight average molecular weight (Mw), molecular weight distribution (Mw/Mn), and coupling rate, gel permeation chromatography (GPC) was carried out to obtain a chart of molecular weights converted to polystyrene and they were determined based on the obtained chart. The specific measurement conditions of gel permeation chromatography were as follows:

Measurement device: High performance liquid chromatograph (made by Tosoh, product name "HLC-8220")
Column: polystyrene columns made by Tosoh, product name "GMH-HR-H", two connected in series.
Detector: Differential refractometer
Eluent: tetrahydrofuran
Column temperature: 40°C

Note that for the coupling rate, in an elution curve obtained by the gel permeation chromatography under the above conditions, the area ratio of peak parts having a peak top molecular weight of 1.8 times or more of the peak top molecular weight shown by a peak of the smallest molecular weight to the total elution area was made the value of the coupling rate of the conjugated diene polymer chain.

[Measurement Method of Modification Rate]

In the conjugated diene rubber, the content ratio of the polymer modified by 2,2-dimethoxy-8-(4-methylpiperazinyl)methyl-1,6-dioxa-2-silacyclooctane as the compound represented by the general formula (1) was measured by the following method utilizing the characteristics of the amine structure contained in 2,2-dimethoxy-8-(4-methylpiperazinyl)methyl-1,6-dioxa-2-silacyclooctane adsorbing to silica gel.

That is, a solution was prepared in which 2 mg of the conjugated diene rubber together with 0.5 mg of standard polystyrene (polystyrene does not adsorb to the columns) having a molecular weight of 2,851,000 were dissolved to 5 mL of THF, and 200 μL of this solution was used as a measurement sample.

Then, using the measurement sample prepared above, GPC measurement using polystyrene columns and GPC measurement using silica columns were carried out. Note that "GMH-HR-H (made by Tosoh)", two connected in series, were used as the polystyrene column, and "Zorbax PSM-1000S (made by Agilent Technologies)", "Zorbax PSM-1000S (made by Agilent Technologies)", "Zorbax PSM-60S (made by Agilent Technologies)", and "TSK gel G3000SWXL (made by Tosoh)", connected in series in the order described, were used as the silica column. Further, in the GPC measurements using any of the columns, high performance liquid chromatograph (made by Tosoh, product name "HLC-8220") was used as the measurement device, tetrahydrofuran was used as the eluent, the column temperature was 40°C, and the flow rate was 0.6 mL/min.

Then, the chromatograms obtained by the GPC measurements were measured using an RI detector, the differences thereof were calculated to measure the adsorbed amount to the silica columns, thereby determining the modification rate by 2,2-dimethoxy-8-(4-methylpiperazinyl)methyl-1,6-dioxa-2-silacyclooctane as the compound represented by the general formula (1).

Specifically, when the entire peak area of chromatogram obtained using the polystyrene columns was 100, the sample peak area was denoted by P1 and the peak area of the standard polystyrene was denoted by P2. Further, when the entire peak area of chromatogram obtained using the silica columns was 100, the sample peak area was denoted by P3 and the peak area of the standard polystyrene was denoted by P4. By following the formula below, the modification rate (%) by 2,2-dimethoxy-8-(4-methylpiperazinyl)methyl-1,6-dioxa-2-silacyclooctane as the compound represented by the general formula (1) was determined.

$$\text{Modification rate (\%)} = [1-(P2 \times P3)/(P1 \times P4)] \times 100$$

Note that the above modification rate is equivalent to the total content ratio of, in the conjugated diene rubber obtained in each Example, the conjugated diene rubber to which the modified structure by polysiloxane and the modified structure by the compound represented by the general formula (1) are introduced, and the conjugated diene rubber to which only the modified structure by the compound represented by the general formula (1) is introduced.

Further, in Comparative Examples 1 and 2, 2,2-dimethoxy-1-phenyl-1-aza-2-silacyclopentane was used in place of 2,2-dimethoxy-8-(4-methylpiperazinyl)methyl-1,6-dioxa-2-silacyclooctane, but the modification rate was also measured in the same manner as in the above in this case.

[Aromatic Vinyl Monomer Unit Content, Vinyl Bond Content]

The aromatic vinyl monomer unit content and vinyl bond content were measured by $^1$H-NMR.

[Low Heat Buildup of Cross-Linked Rubber]

The low heat buildup of cross-linked rubber was evaluated by measuring a test piece of a length 50 mm, width 12.7 mm, and thickness 2 mm for the value of tanδ at 60°C using an ARES made by Rheometrics under conditions of a dynamic stress of 2.5% and 10 Hz. The value of this tanδ was shown indexed to the measured value of Comparative Example 2 as 100. The smaller this index, the better the low heat buildup.

[Wet Grip of Cross-Linked Rubber]

The wet grip of cross-linked rubber was evaluated by measuring a test piece of a length 50 mm, width 12.7 mm, and thickness 2 mm for the value of tanδ at 0°C using an ARES made by Rheometrics under conditions of a dynamic stress of 0.5% and 10 Hz. The value of this tanδ was shown indexed to the measured value of Comparative Example 2 as 100. The larger this index, the better the wet grip.

[Example 1]

49.6 g of cyclohexane and 0.56 mmole of tetramethylethylenediamine were added to a nitrogen-purged 100 ml ampoule bottle, and 5.6 mmole of n-butyllithium was further added. Subsequently, 11.48 g of isoprene and 0.93 g of styrene were added slowly to react in the ampoule bottle at 50°C for 120 minutes, whereby a polymer block (A) having an active end was obtained. This polymer block (A) had a weight average molecular weight (Mw) of 3,700, a molecular weight distribution (Mw/Mn) of 1.09, a styrene monomer unit content of 7.5%, an isoprene monomer unit content of 92.5%, and a vinyl bond content of 8.1%.

Next, an autoclave equipped with a stirrer was charged with, in a nitrogen atmosphere, 4000 g of cyclohexane, 8.1 mmole of tetramethylethylenediamine, 440.4 g of 1,3-butadiene, and 159.6 g of styrene, subsequently the total amount of polymer block (A) having an active end obtained above was added, and the polymerization was started at 40°C. An elapse of 10 minutes of the initiation of polymerization, 350.0 g of 1,3-butadiene and 50.0 g of styrene were continuously added over a period of 60 minutes. The maximum temperature during the polymerization reaction was 60°C. After the continuous addition was completed, the polymerization reaction was further continued for 20 minutes, and when the polymerization conversion rate was confirmed to have ranged from 95% to 100%, 1.81 g of the polyorganosiloxane represented by the following formula (9) below was added in the state of a xylene solution of a 40 wt% concentration (amount equivalent to 1.1 molar times of n-butyllithium used when converted to the number of repeating units of the siloxane structure (-Si-O-) in polyorganosiloxane) and reacted for 30 minutes. Subsequently, 1.71 g of 2,2-dimethoxy-8-(4-methylpiperazinyl)methyl-1,6-dioxa-2-silacyclooctane (amount equivalent to 1.0 molar time of n-butyllithium used) was added and reacted for 15 minutes. Then, methanol in an amount equivalent to 2 molar times of n-butyllithium used was added as a polymerization terminator to obtain a solution containing a conjugated diene rubber. With respect to 100 parts of the conjugated diene rubber, 0.15 parts of Irganox 1520 L (made by Ciba Specialty Chemicals) was added to the solution as an antiaging agent, then steam stripping was performed to remove the solvent and remainder was dried in vacuo at 60°C for 24 hours to obtain a solid conjugated diene rubber. The obtained conjugated diene rubber of Example 1 had a weight average molecular weight (Mw) of 472,000, a styrene monomer unit content of 20.8%, and a coupling rate of 62.3%. Further, the modification rate by 2,2-dimethoxy-8-(4-methylpiperazinyl)methyl-1,6-dioxa-2-silacyclooctane as the compound represented by the general formula (1) was 27.8%.

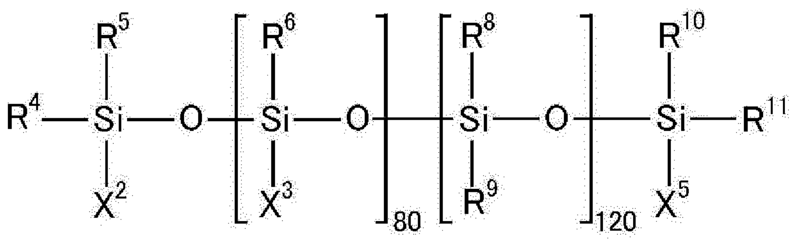

(9)

$X^3$ : 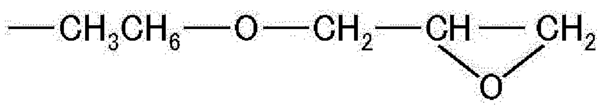

$X^2$, $X^5$, $R^4$~$R^6$, $R^8$~$R^{11}$ : $-CH_3$

[Example 2]

Except for changing the amount of addition of 2,2-dimethoxy-8-(4-methylpiperazinyl)methyl-1,6-dioxa-2-silacyclooctane to 0.91 g (equivalent to 0.5 molar times of n-butyllithium used), the same procedure was followed as in Example 1 to obtain a solid conjugated diene rubber. The obtained conjugated diene rubber of Example 2 had a weight average molecular weight (Mw) of 465,000, a styrene monomer unit content of 20.8%, and a coupling rate of 60.3%. Further, the modification rate by 2,2-dimethoxy-8-(4-methylpiperazinyl)methyl-1,6-dioxa-2-silacyclooctane was 28.2%.

[Example 3]

Except for changing the amount of addition of the polyorganosiloxane represented by the general formula (9) to 1.21 g (amount equivalent to 0.75 molar times of n-butyllithium used when converted to the number of repeating units of the siloxane structure (-Si-O-) in polyorganosiloxane), the same procedure was followed as in Example 1 to obtain a solid conjugated diene rubber. The obtained conjugated diene rubber of Example 3 had a weight average molecular weight (Mw) of 454,000, a styrene monomer unit content of 20.8%, and a coupling rate of 58.2%. Further, the modification rate by 2,2-dimethoxy-8-(4-methylpiperazinyl)methyl-1,6-dioxa-2-silacyclooctane was 32.4%.

[Example 4]

Except for not synthesizing the polymer block (A) having an active end and using 5.6 mmole of n-butyllithium instead of the polymer block (A) having an active end, the same procedure was followed as in Example 1 to obtain a solid conjugated diene rubber. The obtained conjugated diene rubber of Example 4 had a weight average molecular weight (Mw) of 478,000, a styrene monomer unit content of 21.0%, and a coupling rate of 62.0%. Further, the modification rate by 2,2-dimethoxy-8-(4-methylpiperazinyl)methyl-1,6-dioxa-2-silacyclooctane was 28.5%.

[Example 5]

Except for using 4.25 g (amount equivalent to 10 molar times of n-butyllithium used when converted to the number of repeating units of the siloxane structure (-Si-O-) in polyorganosiloxane) of polydimethylsiloxane (made by Shin-Etsu Chemical, product name "KF-96 3000cs") instead of the polyorganosiloxane represented by the general formula (9), the same procedure was followed as in Example 1 to obtain a solid conjugated diene rubber. The obtained conjugated diene rubber of Example 5 had a weight average molecular weight (Mw) of 229,000, a styrene monomer unit content of 20.8%, and a coupling rate of 12.0%. Further, the modification rate by 2,2-dimethoxy-8-(4-methylpiperazinyl)methyl-1,6-dioxa-2-silacyclooctane was 52.1%.

[Example 6]

An autoclave equipped with a stirrer was charged with, in a nitrogen atmosphere, 800 g of cyclohexane, 1.90 mmole of tetramethylethylenediamine, 0.95 mmole of di-N-hexylamine, 94.8 g of 1,3-butadiene, and 25.2 g of styrene, and subsequently 1.23 mmole of n-butyllithium, and the polymerization was started at 60°C. The polymerization reaction was continued for 60 minutes, and when the polymerization conversion rate was confirmed to have ranged from 95% to 100%, 0.22 g (amount equivalent to 1.1 molar times of n-butyllithium used when converted to the number of repeating units of the siloxane structure (-Si-O-) in polyorganosiloxane) of the polyorganosiloxane represented by the general formula (9) was added in the state of a xylene solution of a 40 wt% concentration and reacted for 30 minutes. Subsequently, 0.37 g of 2,2-dimethoxy-8-(4-methylpiperazinyl)methyl-1,6-dioxa-2-silacyclooctane (amount equivalent to 1.0 molar time of n-butyllithium used) was added and reacted for 15 minutes. Then, methanol in an amount equivalent to 2 molar times of n-butyllithium used was added as a polymerization terminator to obtain a solution containing a conjugated diene rubber. With respect to 100 parts of the conjugated diene rubber, 0.15 parts of Irganox 1520 L (made by Ciba Specialty Chemicals) was added to the solution as an antiaging agent, then steam stripping was performed to remove the solvent and remainder was dried in vacuo at 60°C for 24 hours to obtain a solid conjugated diene rubber. The obtained conjugated diene rubber of Example 6 had a weight average molecular weight (Mw) of 470,000, a molecular weight distribution

(Mw/Mn) of 1.30, a styrene monomer unit content of 21.0%, and a coupling rate of 59.0%.

[Example 7]

Except for using 0.95 mmole of pyrrolidine instead of di-N-hexylamine, the same procedure was followed as in Example 6 to obtain a solid conjugated diene rubber. The obtained conjugated diene rubber of Example 7 had a weight average molecular weight (Mw) of 455,000, a molecular weight distribution (Mw/Mn) of 1.28, a styrene monomer unit content of 21.0%, and a coupling rate of 58.8%.

[Example 8]

Except for using 0.95 mmole of hexamethyleneimine instead of di-N-hexylamine, the same procedure was followed as in Example 6 to obtain a solid conjugated diene rubber. The obtained conjugated diene rubber of Example 8 had a weight average molecular weight (Mw) of 495,000, a molecular weight distribution (Mw/Mn) of 1.34, a styrene monomer unit content of 21.0%, and a coupling rate of 61.0%.

[Example 9]

Except for using 0.51 g (amount equivalent to 5.6 molar times of n-butyllithium used when converted to the number of repeating units of the siloxane structure (-Si-O-) in polyorganosiloxane) of polydimethylsiloxane (made by Shin-Etsu Chemical, product name "KF-96 3000cs") instead of the polyorganosiloxane represented by the general formula (9), the same procedure was followed as in Example 6 to obtain a solid conjugated diene rubber. The obtained conjugated diene rubber of Example 9 had a weight average molecular weight (Mw) of 226,000, a molecular weight distribution (Mw/Mn) of 1.23, a styrene monomer unit content of 21.0%, and a coupling rate of 15.5%.

[Comparative Example 1]

Except for using 1.25 g of 2,2-dimethoxy-1-phenyl-1-aza-2-silacyclopentane (amount equivalent to 1.0 molar time of n-butyllithium used) instead of 2,2-dimethoxy-8-(4-methylpiperazinyl)methyl-1,6-dioxa-2-silacyclooctane, the same procedure was followed as in Example 1 to obtain a solid conjugated diene rubber. The obtained conjugated diene rubber of Comparative Example 1 had a weight average molecular weight (Mw) of 468,000, a styrene monomer unit content of 20.8%, and a coupling rate of 61.5%. Further, the modification rate by 2,2-dimethoxy-1-phenyl-1-aza-2-silacyclopentane was 27.0%.

[Comparative Example 2]

Except for not synthesizing the polymer block (A) having an active end and using 5.6 mmole of n-butyllithium instead of the polymer block (A) having an active end, the same procedure was followed as in Comparative Example 1 to obtain a solid conjugated diene rubber. The obtained conjugated diene rubber of Comparative Example 2 had a weight average molecular weight (Mw) of 488,000, a styrene monomer unit content of 21.0%, and a coupling rate of 63.0%. Further, the modification rate by 2,2-dimethoxy-1-phenyl-1-aza-2-silacyclopentane was 27.2%.

[Comparative Example 3]

Except for not using 2,2-dimethoxy-8-(4-methylpiperazinyl)methyl-1,6-dioxa-2-silacyclooctane, the same procedure was followed as in Example 1 to obtain a solid conjugated diene rubber. The obtained conjugated diene rubber of Comparative Example 3 had a weight average molecular weight (Mw) of 481,000, a styrene monomer unit content of 20.8%, and a coupling rate of 62.8%. Further, the modification rate by 2,2-dimethoxy-8-(4-methylpiperazinyl)methyl-1,6-dioxa-2-silacyclooctane was 0%.

[Comparative Example 4]

Except for not synthesizing the polymer block (A) having an active end and using 5.6 mmole of n-butyllithium instead of the polymer block (A) having an active end, the same procedure was followed as in Comparative Example 3 to obtain a solid conjugated diene rubber. The obtained conjugated diene rubber of Comparative Example 4 had a weight average molecular weight (Mw) of 469,000, a styrene monomer unit content of 21.0%, and a coupling rate of 61.5%. Further, the modification rate by 2,2-dimethoxy-8-(4-methylpiperazinyl)methyl-1,6-dioxa-2-silacyclooctane was 0%.

[Production and Evaluation of Rubber Composition and Cross-Linked Rubber]

In a 250 ml Brabender type mixer, 100 parts of the conjugated diene rubber of Example 1 was masticated for 30 seconds, next 50 parts of silica (made by Rhodia, product name "Zeosil 1115MP"), 20 parts of process oil (made by Nippon Oil Corporation, product name "Aromax T-DAE"), and 6.0 parts of the silane coupling agent bis(3-(triethoxysilyl)propyl)tetrasulfide (made by Degussa, product name "Si69") were added and kneaded at a starting temperature of 110°C for 1.5 minutes, then 25 parts of silica (made by Rhodia, product name "Zeosil 1115MP"), 3 parts of zinc oxide, 2 parts of stearic acid, and 2 parts of an antiaging agent N-phenyl-N'-(1,3-dimethylbutyl)-p-phenylene diamine (made by Ouchi Shinko Chemical Industrial, product name "Nocrac 6C") were added and the mixture was further kneaded for 2.5 minutes, then the kneaded material was discharged from the mixer. The temperature of the kneaded material after the end of kneading was 150°C. The kneaded material was cooled down to room temperature, then kneaded again in a Brabender mixer at a starting temperature of 110°C for 2 minutes, and subsequently discharged from the mixer. Next, using open rolls at 50°C, to the obtained kneaded material, 1.4 parts of sulfur, 1.2 parts of a cross-linking accelerator N-tert-butyl-2-benzothiazolesulfenamide (made by Ouchi Shinko Chemical Industrial, product name "Noccelar NS-P"), and 1.2 parts of 1,3-diphenylguanidine (made by Ouchi Shinko Chemical Industrial, product name "Noccelar D") were added and kneaded, and then a sheet-shaped rubber composition was taken out. This rubber composition was pressed to cross-link at 160°C for 20 minutes to prepare a test piece of a cross-linked rubber, and this test piece was evaluated for wet grip and low heat buildup.

Further, the conjugated diene rubbers of Examples 2 to 9, and Comparative Examples 1 to 4 were respectively similarly processed to prepare rubber compositions and test pieces of cross-linked rubbers, and these test pieces were evaluated for wet grip and low heat buildup. Table 1 shows these results together.

[Table 1]

Table 1

| | Polymer block (A) formation at polymerization initiation end | Polymerization initiator | Modifying agent used for modification of first stage | Modifying agent used for modification of second stage | Wet grip (Index) | Low heat buildup (Index) |
|---|---|---|---|---|---|---|
| Example 1 | Present | 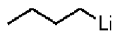 | Polyorganosiloxane | 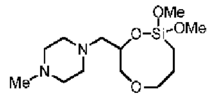 | 104 | 80 |
| Example 2 | Present | 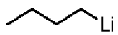 | Polyorganosiloxane | 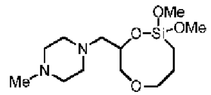 | 102 | 82 |
| Example 3 | Present | 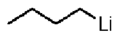 | Polyorganosiloxane | 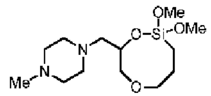 | 103 | 83 |
| Example 4 | None | 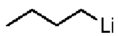 | Polyorganosiloxane | 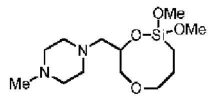 | 102 | 91 |
| Example 5 | Present | 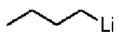 | Polydimethylsiloxane | 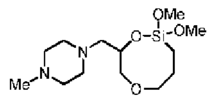 | 101 | 88 |
| Example 6 | None | 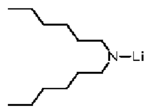 | Polyorganosiloxane | 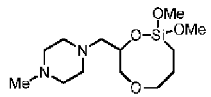 | 109 | 70 |
| Example 7 | None | 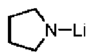 | Polyorganosiloxane | 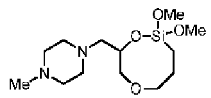 | 110 | 71 |
| Example 8 | None | 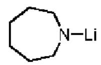 | Polyorganosiloxane | 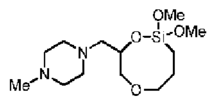 | 109 | 71 |

(continued)

| | Polymer block (A) formation at polymerization initiation end | Polymerization initiator | Modifying agent used for modification of first stage | Modifying agent used for modification of second stage | Wet grip (Index) | Low heat buildup (Index) |
|---|---|---|---|---|---|---|
| Example 9 | None | 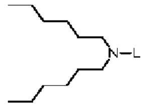 | Polydimethylsiloxane | 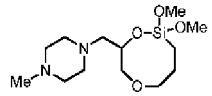 | 106 | 78 |
| Comparative Example 1 | Present | 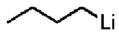 | Polyorganosiloxane | 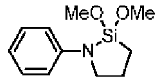 | 99 | 96 |
| Comparative Example 2 | None | 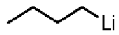 | Polyorganosiloxane | 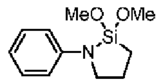 | 100 | 100 |
| Comparative Example 3 | Present | 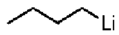 | Polyorganosiloxane | None | 95 | 108 |
| Comparative Example 4 | None | 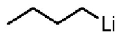 | Polyorganosiloxane | None | 94 | 114 |

As will be revealed from Table 1, the cross-linked rubbers obtained using the conjugated diene rubbers (Examples 1 to 9) obtained by the method of production of a conjugated diene rubber of the present invention are superior to cross-linked rubbers obtained using the conjugated diene rubbers modified by the amine compound other than the compound represented by the general formula (1) after reacted with siloxane (Comparative Examples 1 and 2) and cross-linked rubbers obtained using conjugated diene rubbers modified only by siloxane (Comparative Examples 3 and 4) in low heat buildup and wet grip.

Further, as will be revealed from Table 1, the conjugated diene rubbers obtained using the compound represented by the general formula (4) as the polymerization initiator (Examples 6 to 9) are superior to the conjugated diene rubbers obtained by using only n-butyllithium as the polymerization initiator (Examples 1 to 5) in low heat buildup and wet grip.

## Claims

1. A method of production of a conjugated diene rubber comprising
a first step of polymerizing a monomer containing a conjugated diene compound in an inert solvent using a polymerization initiator so as to obtain a conjugated diene polymer chain having an active end,
a second step of reacting siloxane with the conjugated diene polymer chain having an active end, and
a third step of reacting a compound represented by the following general formula (1) with the conjugated diene polymer chain with which siloxane was reacted obtained in the second step:

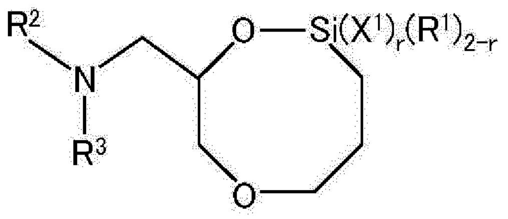

(1)

wherein, in the general formula (1), $X^1$ represents a functional group selected from a hydrocarbyloxy group, a halogen group, and a hydroxyl group, $R^1$ represents a substituted or unsubstituted hydrocarbon group, $R^2$ and $R^3$ respectively independently represent a substituted or unsubstituted hydrocarbon group, $R^2$ and $R^3$ may bond with each other to form a ring structure together with the nitrogen atom to which they are bound, when forming the ring structure they may form a ring structure together with a hetero atom other than the nitrogen atom to which they are bound in addition to the nitrogen atom to which they are bound, "r" is an integer of 0 to 2.

2. The method of production of a conjugated diene rubber according to claim 1, wherein the siloxane is polyorganosiloxane represented by the following general formula (2):

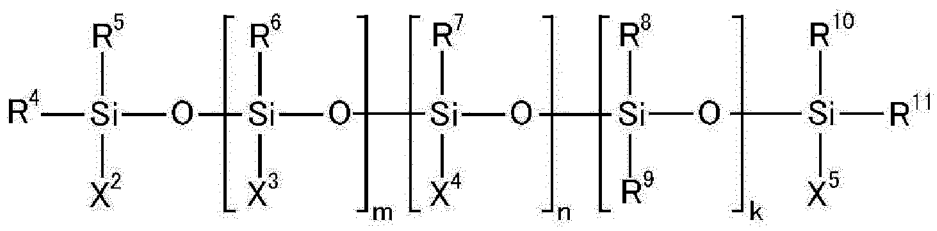

(2)

wherein, in the general formula (2), $R^4$ to $R^{11}$ are an alkyl group having 1 to 6 carbon atoms, or an aryl group having 6 to 12 carbon atoms, these may be the same or may be different from each other; $X^2$ and $X^5$ are any group selected from the group consisting of an alkyl group having 1 to 6 carbon atoms, aryl group having 6 to 12 carbon atoms, alkoxy group having 1 to 5 carbon atoms, and epoxy-group containing group having 4 to 12 carbon atoms, these may be the same or may be different from each other; $X^3$ is an alkoxy group having 1 to 5 carbon atoms, or epoxy-group containing group having 4 to 12 carbon atoms, when there are a plural number of $X^3$, they may be the same or may be different from each other; $X^4$ is a group containing 2 to 20 repeating units of alkylene glycol, when there are a plural number of $X^4$, they may be the same or may be different from each other; "m" is an integer of 0 to 200, "n" is an integer of 0 to 200, "k" is an integer of 0 to 200, and m+n+k is 1 or more.

3. The method of production of a conjugated diene rubber according to claim 1 or 2, wherein a compound represented by the following general formula (3) is used as the compound represented by the general formula (1):

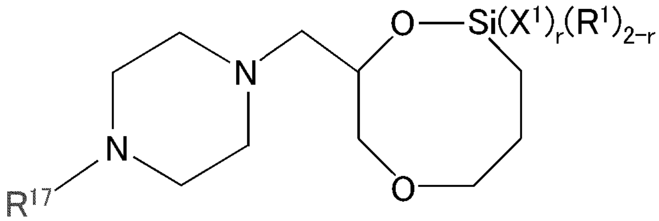

(3)

wherein, in the general formula (3), $X^1$, $R^1$, and "r" represent the same as in the general formula (1), and $R^{17}$ represents a hydrocarbon group.

4. The method of production of a conjugated diene rubber according to any one of claims 1 to 3, wherein an organic alkali metal amide compound is used as the polymerization initiator.

5. The method of production of a conjugated diene rubber according to claim 4, wherein the organic alkali metal amide compound is a compound represented by the following general formula (4):

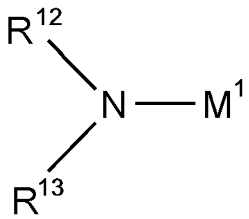

(4)

wherein, in the general formula (4), $M^1$ represents an alkali metal atom, $R^{12}$ and $R^{13}$ respectively independently represent an alkyl group, cycloalkyl group, aryl group, aralkyl group, a protecting group for amino group, or a group which produces a hydroxyl group when hydrolyzed, $R^{12}$ and $R^{13}$ may bond with each other to form a ring structure together with the nitrogen atom to which they are bound, when forming the ring structure they may form a ring structure together with a hetero atom other than the nitrogen atom to which they are bound in addition to the nitrogen atom to which they are bound.

6. The method of production of a conjugated diene rubber according to any one of claims 1 to 5,
wherein the first step comprises:

a step of polymerizing a monomer containing isoprene, or isoprene and an aromatic vinyl compound, in an inert solvent using a polymerization initiator so as to form a polymer block (A) having an active end and containing 80 to 100 wt% of an isoprene monomer unit and 0 to 20 wt% of an aromatic vinyl monomer unit, and
a step of mixing the polymer block (A) having an active end and a monomer containing 1,3-butadiene, or 1,3-butadiene and an aromatic vinyl compound, to continue polymerization reaction, and forming a polymer block (B) having an active end and containing 50 to 100 wt% of a 1,3-butadiene monomer unit and 0 to 50 wt% of an aromatic vinyl monomer unit in series with the polymer block (A) so as to obtain a conjugated diene polymer chain having an active end and containing a polymer block (A) and a polymer block (B).

7. The method of production of a conjugated diene rubber according to claim 6, wherein a weight ratio of the polymer block (A) to the polymer block (B) in the conjugated diene polymer chain having an active end and containing a polymer block (A) and a polymer block (B) is 0.001 to 0.1 in terms of (weight of polymer block (A))/(weight of polymer block (B)).

8. A conjugated diene rubber obtained by the method of production according to any one of claims 1 to 7.

9. A rubber composition comprising 10 to 200 parts by weight of silica with respect to 100 parts by weight of a rubber ingredient containing the conjugated diene rubber according to claim 8.

**10.** The rubber composition according to claim 9 further comprising a cross-linking agent.

**11.** A cross-linked rubber obtained by cross-linking the rubber composition according to claim 10.

**12.** A tire comprising the cross-linked rubber according to claim 11.

**Patentansprüche**

**1.** Verfahren zur Herstellung eines konjugierten Dienkautschuks, umfassend
einen ersten Schritt des Polymerisierens eines Monomers, das eine konjugierte Dienverbindung enthält, in einem inerten Lösungsmittel unter Verwendung eines Polymerisationsstarters, um eine konjugierte Dienpolymerkette mit einem aktiven Ende zu erhalten,
einen zweiten Schritt der Reaktion eines Siloxans mit der konjugierten Dienpolymerkette mit einem aktiven Ende, und einen dritten Schritt des Umsetzens einer Verbindung der folgenden allgemeinen Formel (1) mit der im zweiten Schritt erhaltenen konjugierten Dienpolymerkette, mit der das Siloxan umgesetzt wurde:

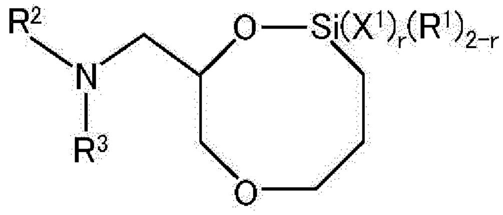

(1)

wobei in der allgemeinen Formel (1) $X^1$ eine funktionelle Gruppe darstellt, ausgewählt aus einer Hydrocarbyloxygruppe, einer Halogengruppe und einer Hydroxylgruppe, $R^1$ eine substituierte oder unsubstituierte Kohlenwasserstoffgruppe darstellt, $R^2$ und $R^3$ jeweils unabhängig voneinander eine substituierte oder unsubstituierte Kohlenwasserstoffgruppe darstellen, $R^2$ und $R^3$ miteinander verbunden sein können, um zusammen mit dem Stickstoffatom, an das sie gebunden sind, eine Ringstruktur zu bilden, wobei sie beim Bilden der Ringstruktur eine Ringstruktur zusammen mit einem von dem Stickstoffatom, an das sie gebunden sind, verschiedenen Heteroatom zusätzlich zu dem Stickstoffatom, an das sie gebunden sind, bilden können, "r" eine ganze Zahl von 0 bis 2 ist.

**2.** Verfahren zur Herstellung eines konjugierten Dienkautschuks nach Anspruch 1, worin das Siloxan ein Polyorganosiloxan der folgenden allgemeinen Formel (2) ist:

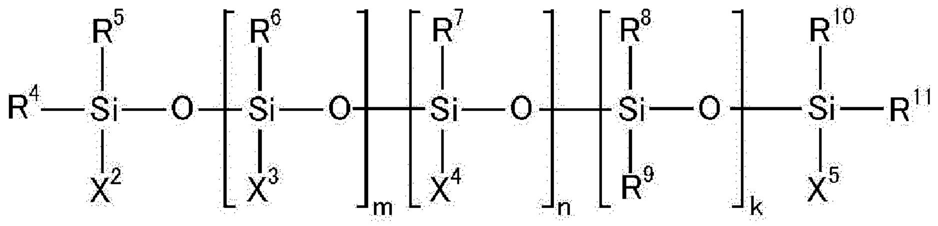

(2)

wobei in der allgemeinen Formel (2) $R^4$ bis $R^{11}$ eine Alkylgruppe mit 1 bis 6 Kohlenstoffatomen oder eine Arylgruppe mit 6 bis 12 Kohlenstoffatomen sind, die gleich oder voneinander verschieden sein können; $X^2$ und $X^5$ eine beliebige Gruppe ausgewählt aus der Gruppe bestehend aus einer Alkylgruppe mit 1 bis 6 Kohlenstoffatomen, einer Arylgruppe mit 6 bis 12 Kohlenstoffatomen, einer Alkoxygruppe mit 1 bis 5 Kohlenstoffatomen und einer Epoxygruppe-haltigen Gruppe mit 4 bis 12 Kohlenstoffatomen sind, die gleich oder voneinander verschieden sein können; $X^3$ eine Alkoxygruppe mit 1 bis 5 Kohlenstoffatomen oder eine Epoxygruppe mit einer Gruppe mit 4 bis 12 Kohlenstoffatomen ist, die, wenn eine Vielzahl von $X^3$ vorliegt, gleich oder voneinander verschieden sein können; $X^4$ eine Gruppe ist, die 2 bis 20 sich wiederholende Einheiten von Alkylenglykol enthält, die, wenn eine Vielzahl von $X^4$ vorliegt, gleich oder voneinander verschieden sein können; "m" eine ganze Zahl von 0 bis 200 ist, "n" eine ganze Zahl von 0 bis 200 ist, "k" eine ganze Zahl von 0 bis 200 und m+n+k ist 1 oder mehr ist.

**3.** Verfahren zur Herstellung eines konjugierten Dienkautschuks nach Anspruch 1 oder 2, worin eine Verbindung der folgenden allgemeinen Formel (3) als Verbindung der allgemeinen Formel (1) verwendet wird:

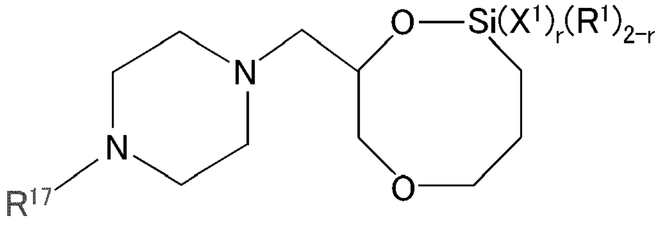

(3)

wobei in der allgemeinen Formel (3) $X^1$, $R^1$ und "r" das gleiche wie in der allgemeinen Formel (1) darstellen und $R^{17}$ eine Kohlenwasserstoffgruppe darstellt.

**4.** Verfahren zur Herstellung eines konjugierten Dienkautschuks nach einem der Ansprüche 1 bis 3, worin eine organische Alkalimetallamidverbindung als Polymerisationsstarter verwendet wird.

**5.** Verfahren zur Herstellung eines konjugierten Dienkautschuks nach Anspruch 4, worin die organische Alkalimetallamidverbindung eine Verbindung der folgenden allgemeinen Formel (4) ist:

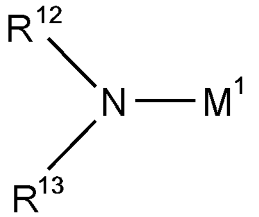

(4)

wobei in der allgemeinen Formel (4) $M^1$ ein Alkalimetallatom darstellt, $R^{12}$ und $R^{13}$ jeweils unabhängig voneinander eine Alkylgruppe, Cycloalkylgruppe, Arylgruppe, Aralkylgruppe, eine Schutzgruppe für eine Aminogruppe oder eine Gruppe, die bei der Hydrolyse eine Hydroxylgruppe erzeugt, darstellen, $R^{12}$ und $R^{13}$ miteinander verbunden sein können, um zusammen mit dem Stickstoffatom, an das sie gebunden sind, eine Ringstruktur zu bilden, wobei sie beim Bilden der Ringstruktur eine Ringstruktur zusammen mit einem von dem Stickstoffatom, an das sie gebunden sind, verschiedenen Heteroatom bilden können.

**6.** Verfahren zur Herstellung eines konjugierten Dienkautschuks nach einem der Ansprüche 1 bis 5, wobei der erste Schritt umfasst:

einen Schritt des Polymerisierens eines Monomers, das Isopren oder Isopren und eine aromatische Vinylverbindung enthält, in einem inerten Lösungsmittel unter Verwendung eines Polymerisationsstarters, um einen Polymerblock (A) mit einem aktiven Ende zu bilden, der 80 bis 100 Gew.-% einer Isoprenmonomereinheit und 0 bis 20 Gew.-% einer aromatischen Vinylmonomereinheit enthält, und
einen Schritt des Mischens des Polymerblocks (A) mit einem aktiven Ende mit einem Monomer, das 1,3-Butadien oder 1,3-Butadien und eine aromatische Vinylverbindung enthält, um die Polymerisationsreaktion fortzusetzen, und Bilden eines Polymerblocks (B) mit einem aktiven Ende, der 50 bis 100 Gew.-% einer 1,3-Butadien-Monomereinheit und 0 bis 50 Gew.-% einer aromatischen Vinylmonomereinheit in Reihe mit dem Polymerblock (A) enthält, um eine konjugierte Dienpolymerkette mit einem aktiven Ende zu erhalten, die einen Polymerblock (A) und einen Polymerblock (B) enthält.

**7.** Verfahren zur Herstellung eines konjugierten Dienkautschuks nach Anspruch 6, wobei ein Gewichtsverhältnis des Polymerblocks (A) zum Polymerblock (B) in der konjugierten Dienpolymerkette mit einem aktiven Ende, das einen Polymerblock (A) und einen Polymerblock (B) enthält, (Gewicht des Polymerblocks (A))/(Gewicht des Polymerblocks (B)), 0,001 bis 0,1 beträgt.

**8.** Konjugierter Dienkautschuk erhalten durch das Verfahren zur Herstellung nach einem der Ansprüche 1 bis 7.

**9.** Kautschukzusammensetzung umfassend 10 bis 200 Gewichtsteile Silica, bezogen auf 100 Gewichtsteile eines Kautschukbestandteils, der den konjugierten Dienkautschuk nach Anspruch 8 enthält.

**10.** Kautschukzusammensetzung nach Anspruch 9 ferner umfassend ein Vernetzungsmittel.

11. Vernetzter Kautschuk erhalten durch Vernetzung der Kautschukzusammensetzung nach Anspruch 10.

12. Reifen umfassend den vernetzten Kautschuk nach Anspruch 11.

## Revendications

1. Procédé de production d'un caoutchouc de diène conjugué, comprenant
une première étape consistant à polymériser un monomère contenant un composé diène conjugué dans un solvant inerte par utilisation d'un amorceur de polymérisation de façon que soit obtenue une chaîne polymère de diène conjugué ayant une extrémité active,
une deuxième étape consistant à faire réagir un siloxane avec la chaîne polymère de diène conjugué ayant une extrémité active, et
une troisième étape consistant à faire réagir un composé représenté par la formule générale (1) qui suit avec la chaîne polymère de diène conjugué avec laquelle le siloxane a été mis à réagir, obtenue dans la deuxième étape

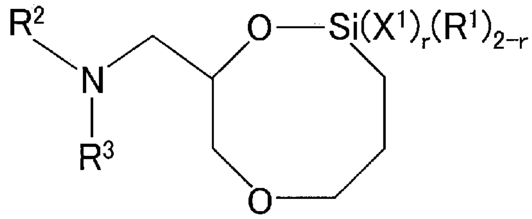

(1)

où, dans la formule générale (1), $X^1$ représente un groupe fonctionnel choisi parmi un groupe hydrocarbyloxy, un groupe halogéno, et un groupe hydroxyle, $R^1$ représente un groupe hydrocarboné substitué ou non substitué, et $R^2$ et $R^3$ représentent indépendamment respectivement un groupe hydrocarboné substitué ou non substitué, $R^2$ et $R^3$ peuvent être liés l'un à l'autre pour former une structure cyclique conjointement avec l'atome d'azote auquel ils sont liés, lors de la formation de la structure cyclique ils peuvent former une structure cyclique conjointement avec un hétéroatome autre que l'atome d'azote auquel ils sont liés en plus de l'atome d'azote auquel ils sont liés, "r" est un entier de 0 à 2.

2. Procédé de production d'un caoutchouc de diène conjugué selon la revendication 1, dans lequel le siloxane est un polyorganosiloxane représenté par la formule générale (2) suivante :

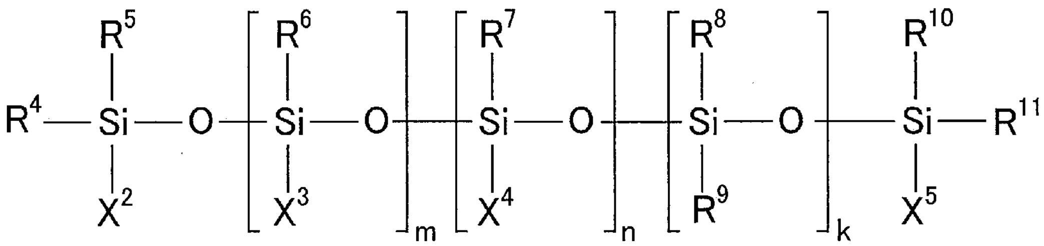

(2)

où, dans la formule générale (2), $R^4$ à $R^{11}$ sont un groupe alkyle ayant 1 à 6 atomes de carbone, ou un groupe aryle ayant 6 à 12 atomes de carbone, et ils peuvent être mutuellement identiques ou différents ; $X^2$ et $X^5$ sont n'importe quel groupe choisi dans l'ensemble constitué par un groupe alkyle ayant 1 à 6 atomes de carbone, un groupe aryle ayant 6 à 12 atomes de carbone, un groupe alcoxy ayant 1 à 5 atomes de carbone, et un groupe contenant un groupe époxy et ayant 4 à 12 atomes de carbone, et ils peuvent être mutuellement identiques ou différents ; $X^3$ est un groupe alcoxy ayant 1 à 5 atomes de carbone, ou un groupe contenant un groupe époxy ayant 4 à 12 atomes de carbone et, quand il y a plusieurs $X^3$, ils peuvent être mutuellement identiques ou différents ; $X^4$ est un groupe contenant 2 à 20 motifs répétitifs d'alkylèneglycol, et quand il y a plusieurs $X^4$, ils peuvent être mutuellement identiques ou différents ; "m" est un entier de 0 à 200, "n" est un entier de 0 à 200, "k" est un entier de 0 à 200, et m+n+k vaut 1 ou plus.

**3.** Procédé de production d'un caoutchouc de diène conjugué selon la revendication 1 ou 2, dans lequel un composé représenté par la formule générale (3) qui suit est utilisé en tant que composé représenté par la formule générale (1) :

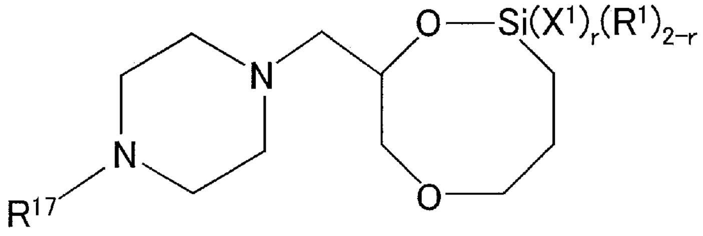

(3)

où, dans la formule générale (3), $X^1$, $R^1$ et "r" sont les mêmes que dans la formule générale (1), et $R^{17}$ représente un groupe hydrocarboné.

**4.** Procédé de production d'un caoutchouc de diène conjugué selon l'une quelconque des revendications 1 à 3, dans lequel un composé amide de métal alcalin organique est utilisé en tant qu'amorceur de polymérisation.

**5.** Procédé de production d'un caoutchouc de diène conjugué selon la revendication 4, dans lequel le composé amide de métal alcalin organique est un composé représenté par la formule générale (4) suivante :

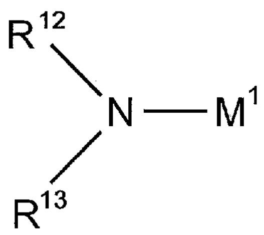

(4)

où, dans la formule générale (4), $M^1$ représente un atome de métal alcalin, $R^{12}$ et $R^{13}$ représentent indépendamment un groupe alkyle, un groupe cycloalkyle, un groupe aryle, un groupe aralkyle, un groupe protecteur pour groupe amino, ou un groupe qui produit un groupe hydroxyle quand il est hydrolysé, $R^{12}$ et $R^{13}$ peuvent être liés l'un à l'autre pour former une structure cyclique conjointement avec l'atome d'azote auquel ils sont liés, lors de la formation de la structure cyclique ils peuvent former une structure cyclique conjointement avec un hétéroatome autre que l'atome d'azote auquel ils sont liés en plus de l'atome d'azote auquel ils sont liés.

**6.** Procédé de production d'un caoutchouc de diène conjugué selon l'une quelconque des revendications 1 à 5, dans lequel la première étape comprend :

une étape consistant à polymériser un monomère contenant de l'isoprène, ou de l'isoprène, et un composé vinylaromatique, dans un solvant inerte, par utilisation d'un amorceur de polymérisation de façon à former un bloc polymère (A) ayant une extrémité active et contenant 80 à 100 % en poids d'un motif monomère d'isoprène et 0 à 20 % en poids d'un motif monomère vinylaromatique, et

une étape consistant à mélanger le copolymère séquencé (A) ayant une extrémité active et un monomère contenant du 1,3-butadiène, ou du 1,3-butadiène, et un composé vinylaromatique, pour que la réaction de polymérisation se poursuivre, et à former un bloc polymère (B) ayant une extrémité active et contenant 50 à 100 % en poids d'un motif monomère de 1,3-butadiène et 0 à 50 % en poids d'un motif monomère vinylaromatique en série avec le bloc polymère (A) de façon que soit obtenue une chaîne polymère de diène conjugué ayant une extrémité active et contenant un bloc polymère (A) et un bloc polymère (B).

**7.** Procédé de production d'un caoutchouc de diène conjugué selon la revendication 6, dans lequel le rapport en poids du bloc polymère (A) au bloc polymère (B) dans la chaîne polymère de diène conjugué ayant une extrémité active et contenant un bloc polymère (A) et un bloc polymère (B) est de 0,001 à 0,1 en termes de (poids du bloc polymère

(A)) / (poids du bloc polymère (B)).

**8.** Caoutchouc de diène conjugué obtenu par le procédé de production de l'une quelconque des revendications 1 à 7.

**9.** Composition de caoutchouc comprenant 10 à 200 parties en poids de silice pour 100 parties en poids d'un ingrédient caoutchouc contenant le caoutchouc de diène conjugué selon la revendication 8.

**10.** Composition de caoutchouc selon la revendication 9, comprenant en outre un agent de réticulation.

**11.** Caoutchouc réticulé obtenu par réticulation de la composition de caoutchouc selon la revendication 10.

**12.** Pneu comprenant le caoutchouc réticulé selon la revendication 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011046640 A
- JP 2012017291 A
- JP 2003171418 A
- WO 2014050341 A